# EUROPÄISCHE PATENTSCHRIFT

(11) **EP 3 516 751 B1**
(45) Veröffentlichungstag und Bekanntmachung des Hinweises auf die Patenterteilung: **29.07.2020**
(21) Anmeldenummer: 17776977.5
(22) Anmeldetag: 19.09.2017
(51) Int. Cl.: H02J 7/00

(54) **VORRICHTUNG UND VERFAHREN ZUM ZUFÜHREN VON ENERGIE ZU EINER MEHRZAHL VON ENERGIESPEICHERBAUTEILEN UND/ODER ZUM BEREITSTELLEN VON IN DEN ENERGIESPEICHERBAUTEILEN GESPEICHERTER ENERGIE**
DEVICE AND METHOD FOR SUPPLYING ENERGY TO A PLURALITY OF ENERGY STORAGE COMPONENTS AND/OR FOR PROVIDING ENERGY STORED IN THE ENERGY STORAGE COMPONENTS
DISPOSITIF ET PROCÉDÉ PERMETTANT L'ALIMENTATION EN ÉNERGIE D'UNE PLURALITÉ DE COMPOSANTS D'ACCUMULATEUR D'ÉNERGIE ET/OU LA FOURNITURE DE L'ÉNERGIE STOCKÉE DANS LES COMPOSANTS D'ACCUMULATEUR D'ÉNERGIE

(30) Priorität: 21.09.2016 DE 102016218160
(43) Veröffentlichungstag der Anmeldung: 31.07.2019
(73) Patentinhaber: Fraunhofer-Gesellschaft zur Förderung der angewandten Forschung e.V., 80686 München (DE)
(72) Erfinder: BRUCH, Maximilian, 79110 Freiburg (DE); VETTER, Matthias, 79110 Freiburg (DE); ABBASSI, Naqqash, 79110 Freiburg (DE)
(74) Vertreter: Burger, Markus
(86) Internationale Anmeldenummer: PCT/EP2017/073686
(87) Internationale Veröffentlichungsnummer: WO 2018/054926

(56) Entgegenhaltungen:
- EP-A2- 1 020 973
- WO-A1-2010/150139
- FR-A1- 2 977 083
- US-A1- 2003 117 109
- US-A1- 2008 316 774
- US-A1- 2012 153 729

## Beschreibung

### Technisches Gebiet

Ein Ausführungsbeispiel gemäß der vorliegenden Erfindung betrifft eine Vorrichtung zum Zuführen von Energie zu einer Mehrzahl von Energiespeicherbauteilen und zum Bereitstellen von in den Energiespeicherbauteilen gespeicherter Energie. Ein Ausführungsbeispiel gemäß der vorliegenden Erfindung betrifft ein Energiespeichersystem mit einer Vorrichtung zum Zuführen von Energie zu einer Mehrzahl von Energiespeicherbauteilen und/oder zur Bereitstellung von in den Energiespeicherbauteilen gespeicherter Energie, einem ersten Energiespeicherbauteil und einem zweiten Energiespeicherbauteil. Ein Ausführungsbeispiel gemäß der vorliegenden Erfindung betrifft ein Verfahren zum Zuführen von Energie zu einer Mehrzahl von Energiespeicherbauteilen und zum Bereitstellen von in den Energiespeicherbauteilen gespeicherter Energie. Eine Ausführungsbeispiel gemäß der vorliegenden Erfindung betrifft eine Vorrichtung zum Zuführen von Energie zu einer Mehrzahl von Energiespeicherbauteilen und/oder zum Bereitstellen von in den Energiespeicherbauteilen gespeicherter Energie. Ein Ausführungsbeispiel gemäß der vorliegenden Erfindung betrifft ein Energiespeichersystem mit einer Vorrichtung zum Zuführen von Energie zu einer Mehrzahl von Energiespeicherbauteilen und/oder zum Bereitstellen von in den Energiespeicherbauteilen gespeicherter Energie, einem ersten Energiespeicherbauteil und einem zweiten Energiespeicherbauteil, wobei das erste Energiespeicherbauteil und das zweite Energiespeicherbauteil elektrisch in Reihe geschaltet sind.

Weitere Ausführungsbeispiele gemäß der Erfindung können stationäre Stromspeicher (beispielsweise Unterbrechungsfreie Stromversorgungen=USV) sowie Batteriesysteme in elektrischen Fahrzeugen umfassen. Ferner schafft ein weiteres Ausführungsbeispiel gemäß der Erfindung ein bidirektionales Speichersystem mit entkoppelter Batteriezellspannung. Des Weiteren umfassen Ausführungsbeispiele gemäß der Erfindung ein Speichersystem sowie eine Steuerelektronik.

### Hintergrund der Erfindung

Bisher existieren verschiedene Konzepte zur Speicherung und Bereitstellung von elektrischer Energie. Beispielsweise kann eine wiederaufladbare Batteriezelle zu diesem Zweck genutzt werden. Allerdings ist es in einigen Fällen notwendig mehrere Batteriezellen geeignet zu verschalten, um beispielsweise für einen Verbraucher einen ausreichenden Strom oder eine ausreichende Spannung zu erzeugen.

Die WO 2015071045 beschreibt eine Bordnetzleistungssteuerschaltung.

In US 6,172,505 ist eine Vorrichtung zum elektronischen Prüfen oder Überwachen des Zustands einer Speicherbatterie beschrieben.

Die US 2005007797 beschreibt einen statischen Inverter für Batterien.

Die US 5,994,793 beschreibt ein unterbrechungsfreies Leistungssystem.

Die US 2010283433 beschreibt eine Erfindung, die sich im Allgemeinen auf Ladeausgleichsvorrichtungen für Batterien bezieht.

Die AT 514385 beschreibt einen quadratischen Tiefsetzteiler.

Die US 6100663 beschreibt ein Ladegerät zum induktiven Laden von Batterien.

Die US 2007029965 beschreibt eine Batterieladeschaltung und eine Struktur für Kompatibilität mit planaren induktiven Ladeplattformen.

Die WO 11144509 beschreibt ein induktives Batteriebalancing (=Batterieladungsausgleich) mit reduziertem Schaltungsaufwand.

Die US 2005040711 beschreibt einen Multitorleistungswandler, bei dem alle Tore durch verschiedene Wicklungen eines Hochfrequenztransformators gekoppelt sind.

Die US 4742441 beschreibt einen Hochfrequenzschaltleistungswandler.

Die US 3517300 beschreibt eine Leistungskonverterschaltung, die eine Frequenzverknüpfung hat.

Die US20030141843 beschreibt eine Spannungsausgleichsvorrichtung für Batteriegeräte.

Die US20050077879 beschreibt ein Energieübertragungsgerät für in Reihe geschaltete Energiequelleinrichtungen und Speichereinrichtungen

Die US20050140335 beschreibt ein Ausgleichsgerät für eine Reihe von verknüpften Batteriesträngen.

Die EP1020973 beschreibt ein Energieübertragungsgerät gemäß dem Präambel von Anspruch 1.

Es besteht daher ein Bedarf an einem flexiblen Konzept, das ein Zuführen von Energie zu einer Mehrzahl von Energiespeicherbauteilen und zum Bereitstellen von in den Energiespeicherbauteilen gespeicherter Energie ermöglicht.

### Zusammenfassung der Erfindung

Ein Ausführungsbeispiel gemäß der Erfindung schafft eine Vorrichtung zum Zuführen von Energie zu einer Mehrzahl von Energiespeicherbauteilen und zum Bereitstellen von in den Energiespeicherbauteilen gespeicherter Energie. Die Vorrichtung umfasst einen ersten Energiespeicheranschluss zum Anschluss eines ersten Energiespeicherbauteils, sowie einen zweiten Energiespeicheranschluss zum Anschluss eines zweiten Energiespeicherbauteils und einen weiteren Anschluss zum Zuführen und/oder Bereitstellen von Energie. Weiterhin weist die Vorrichtung einen optional einen gemeinsamen magnetischen Flussleiter auf. Des Weiteren umfasst die Vorrichtung einen ersten Kopplungsmechanismus, der ausgelegt ist, um den ersten Energiespeicheranschluss an den gemeinsamen magnetischen Flussleiter (oder allgemein an einen gemeinsamen magnetischen Fluss) bidirektional anzukoppeln, einen zweiten Kopplungsmechanismus, der ausgelegt ist, um den zweiten Energiespeicheranschluss an den gemeinsamen magnetischen Flussleiter (oder allgemein an den gemeinsamen magnetischen Fluss) bidirektional anzukoppeln, sowie einen weiteren Kopplungsmechanismus, der ausgelegt ist, um den weiteren Anschluss an den gemeinsamen magnetischen Flussleiter (oder allgemein an den gemeinsamen magnetischen Fluss) anzukoppeln. Des Weiteren weist die Vorrichtung eine galvanische Trennung des ersten Energiespeicheranschlusses und des zweiten Energiespeicheranschlusses sowie des weiteren Anschlusses auf. Eine derart ausgelegte Vorrichtung ermöglicht ein flexibles Bereitstellen wie auch Zuführen von Energie von und zu den Energiespeicherbauteilen.

Dieses Ausführungsbeispiel gemäß der Erfindung basiert auf der Erkenntnis, dass elektrische Energie effizient mittels eines magnetischen Wechselfeldes, welches sich vorzugsweise in einem magnetischen Flussleiter ausbildet beziehungsweise sich in einem magnetischen Flussleiter konzentriert (wobei der gemeinsame magnetische Flussleiter aber nicht zwingend erforderlich ist), bidirektional übertragen, kombiniert oder aufgeteilt werden kann, und dass eine Verwendung eines solchen Magnetfeld-basierten Kopplungsmechanismus zur Verkoppelung von Energiespeicherbauteilen eine große Freiheit bei der individuellen Festlegung von Energieflussrichtungen und Energieflussmengen ermöglicht. Ferner ermöglicht es der Magnetfeld-basierte Kopplungsmechanismus, hohe Spannungen und/oder Ströme zu vermeiden und somit die Sicherheit eines Energiespeichersystems zu verbessern. Weiterhin ist eine solche Ausführung vorteilhaft, da durch galvanische Trennung von an den Energiespeicheranschlüssen angeschlossenen Energiespeicherbauteilen eine Addition von Strömen oder Spannungen vermieden werden kann, welche für einen Nutzer gesundheitsgefährdend sein kann. Des Weiteren kann durch die galvanische Trennung einen verbesserte Modularität erzielt werden da Energiespeicherbauteile vereinfacht angeschlossen oder entfernt werden können. Hinzukommend können dadurch beispielsweise vereinfacht Energiespeicherbauteile mit unterschiedlichem Alterungszustand mit den Energiespeicheranschlüssen verbunden werden. Zusammenfassend ermöglicht das beschriebene Ausführungsbeispiel ein Vorrichtung zum Zuführen und Bereitstellen von Energie mit hoher Flexibilität.

An die Stelle des oben beschriebenen gemeinsamen magnetischen Flussleiter kann, ganz allgemein, auch ein gemeinsamer magnetischer Fluss treten, beziehungsweise jede Art von (einstückiger oder mehrstückiger) Vorrichtung, die einen gemeinsamen magnetischen Fluss erzielt. So ist es ausreichend, wenn das Magnetfeld (oder der magnetische Fluss), mit dem die Kopplungsmechanismen gekoppelt sind, gemeinsam ist. Der Eisenkern der Spule(n) (oder, allgemein, ein magnetischer Flussleiter) könnte jedoch separat gestaltet sein (so dass beispielsweise jedem Kopplungsmechanismus ein Abschnitt des magnetischen Flussleiters zugeordnet ist).

Soweit im hierin auf eine Koppelung mit einem gemeinsamen magnetischen Flussleiter Bezug genommen wird, so kann an dessen Stelle auch eine Koppelung mit einem gemeinsamen magnetischen Fluss oder mit einem gemeinsamen Magnetfeld treten.

Ein Aspekt der Erfindung betrifft somit eine Vorrichtung zum Zuführen von Energie zu einer Mehrzahl von Energiespeicherbauteilen und zum Bereitstellen von in den Energiespeicherbauteilen gespeicherter Energie, mit einem ersten Energiespeicheranschluss zum Anschluss eines ersten Energiespeicherbauteils, einem zweiten Energiespeicheranschluss zum Anschluss eines zweiten Energiespeicherbauteils, einem weiteren Anschluss zum Zuführen und/oder Bereitstellen von Energie, einem ersten Kopplungsmechanismus, der ausgelegt ist, um den ersten Energiespeicheranschluss an einen gemeinsamen magnetischen Fluss bidirektional anzukoppeln, einem zweiten Kopplungsmechanismus, der ausgelegt ist, um den zweiten Energiespeicheranschluss an den gemeinsamen magnetischen Fluss bidirektional anzukoppeln und einem weiteren Kopplungsmechanismus, der ausgelegt ist, um den weiteren Anschluss an den gemeinsamen magnetischen Fluss anzukoppeln, wobei die Vorrichtung eine galvanische Trennung des ersten Energiespeicheranschlusses und des zweiten Energiespeicheranschlusses sowie des weiteren Anschlusses aufweist.

Diese Vorrichtung basiert auf denselben Überlegungen wie die zuerst beschriebene Vorrichtungen und kann um dieselben Merkmale und Funktionalitäten ergänzt werden wie die zuerst beschriebene Vorrichtung.

Bei einem weiteren bevorzugten Ausführungsbeispiel weist die Vorrichtung einen Transformator auf, wobei der erste Kopplungsmechanismus, der zweite Kopplungsmechanismus und der weitere Kopplungsmechanismus Spulen, die auf dem gemeinsamen magnetischen Flussleiter des Transformators angeordnet sind, aufweisen. Bei einem derartigen Ausführungsbeispiel kann beispielsweise vorteilhaft durch geeignete Dimensionierung der Windungszahlen der Spulen ein gewünschte Spannungsverhältnis an den Anschlüssen erzeugt werden.

Bei einem bevorzugten Ausführungsbeispiel weist die Vorrichtung weitere Energiespeicheranschlüsse sowie weitere Kopplungsmechanismen zum bidirektionalen Ankoppeln weiterer Energiespeicheranschlüsse auf. Die weiteren Energiespeicheranschlüsse sind zum Anschließen weiterer Energiespeicherbauteile ausgelegt und der Transformator ist in Form eines Mehrphasentransformators ausgelegt. Ein derartiges Ausführungsbeispiel ist günstig, um beispielsweise eine Kopplung zu einem bestehenden oder zu erzeugenden Drehstromnetz zu ermöglichen.

Bei einem bevorzugten Ausführungsbeispiel weist der erste Kopplungsmechanismus und/oder der zweite Kopplungsmechanismus und/oder der weitere Kopplungsmechanismus und/oder weitere Kopplungsmechanismen eine Gleichspannungskreis-Wechselspannungskreis-Koppeleinrichtung auf. Die Gleichspannungskreis-Wechselspannungskreis-Koppeleinrichtung ist ausgelegt, um ein jeweiliges Gleichspannungs-Energiespeicherbauteil mit einer jeweiligen Spule, die auf dem gemeinsamen magnetischen Flussleiter angeordnet ist, und in der eine Wechselspannung induziert wird, oder durch die im Betrieb ein Wechselstrom fließt, zu koppeln. Eine Auslegung der Vorrichtung wie in dem Ausführungsbeispiel beschrieben, ist vorteilhaft, um basierend auf einer in dem Energiespeicherbauteil gespeicherten Energie eine Wechselspannung zu erzeugen (beispielsweise indem basierend auf der in dem Energiespeicherbauteil gespeicherten Energie ein Beitrag zu dem magnetischen Wechselfeld erzeugt wird), und/oder um beispielsweise ein Gleichspannungsenergiespeicherbauteil an ein magnetisches Wechselfeld anzukoppeln (beispielsweise indem basierend auf einer durch das Wechselfeld erzeugten Wechselspannung ein Gleichstrom zum Speichern von Energie in dem Energiespeicherbauteil erzeugt wird).

Bei einem bevorzugten Ausführungsbeispiel weist die Vorrichtung eine Steuereinheit auf, die ausgelegt ist, um Steuersignale für die Gleichspannungskreis-Wechselspannungskreis-Koppeleinrichtung bereitzustellen. Die Steuereinheit ist ausgelegt, um durch die Steuersignale eine Richtung eines Energieflusses in dem ersten Kopplungsmechanismus oder in dem zweiten Kopplungsmechanismus von einem jeweiligen Energiespeicherbauteil hin zu dem magnetischen Flussleiter oder umgekehrt festzulegen. Weiterhin ist die Steuereinheit ausgelegt, um die Steuersignale an eine Frequenz eines in dem magnetischen Flussleiter erzeugten oder zu erzeugenden magnetischen Wechselfeldes anzupassen. Eine derartige ausgelegte Vorrichtung ist vorteilhaft, um beispielsweise Energiespeicherbauteile und Quellen und/oder Verbraucher mit unterschiedlichen Frequenzen einander anzugleichen. Hierbei bestimmt beispielsweise eine Quelle oder Last mit einer festen Betriebsfrequenz eine Frequenz des magnetischen Wechselfelds. Die Steuereinheit kann beispielsweise eine Sollfrequenzinformation, d.h. eine Information bezüglich der Frequenz des magnetischen Wechselfelds, bestimmen an eine Gleichspannungskreis-Wechselspannungskreis-Koppeleinrichtung weiterleiten. Entsprechend der erhaltenen Sollfrequenzinformation kann ein bidirektionaler Kopplungsmechanismus mittels der Gleichspannungskreis -Wechselspannungskreis-Koppeleinrichtung beispielsweise ein Gleichspannungsenergiespeicherbauteil an das magnetische Wechselfeld des magnetischen Flussleiters ankoppeln.

Bei einem bevorzugten Ausführungsbeispiel ist die Vorrichtung ausgelegt, durch die Steuereinheit ein Batteriemanagement zu realisieren. Eine derart ausgelegte Vorrichtung ist vorteilhaft, um beispielsweise ein aktives Balancing(=Ladungsausleich) ausführen zu können.
Bei einem bevorzugten Ausführungsbeispiel weist die Vorrichtung eine Mehrzahl von dezentralen Steuereinheiten auf, die jeweils ausgelegt sind, um einen einzelnen Kopplungsmechanismus oder eine Gruppe von Kopplungsmechanismen zu steuern. Weiterhin weist die Vorrichtung eine zentrale Steuereinheit auf, die ausgelegt ist, um Funktionen der dezentralen Steuereinheiten zu koordinieren. Des Weiteren sind die dezentralen Steuereinheiten drahtlos mit der zentralen Steuereinheit gekoppelt. Eine dem Ausführungsbeispiel entsprechende Vorrichtung ist günstig, um beispielsweise ein einfaches Abkoppeln von Energiespeicherbauteilen zu ermöglichen. Weiterhin bietet eine derartige Vorrichtung beispielsweise Vorteile bezüglich der Erweiterbarkeit, da neu hinzugefügte dezentrale Steuereinheiten nicht über eine Kabelverbindung mit der zentralen Steuereinheit verbunden werden müssen.

Bei einem bevorzugten Ausführungsbeispiel weist die Vorrichtung eine Kopplung der Steuereinheiten mittels magnetischer Induktion über den gemeinsamen magnetischen Flussleiter auf. Durch die beschriebene Kopplung werden Signale zwischen der zentralen Steuereinheit und den dezentralen Steuereinheiten übertragen. Eine Vorrichtung gemäß dem Ausführungsbeispiel ist beispielsweise vorteilhaft für eine energetisch günstige Sigalübertragung, da keine zusätzlichen Übertragungspfade eingerichtet werden müssen. Des Weiteren ermöglicht das beschriebene Ausführungsbeispiel beispielsweise eine kompaktere Bauweise der Vorrichtung.

Bei einem weiteren bevorzugten Ausführungsbeispiel weist die Vorrichtung eine Steuereinheit auf, die ausgelegt ist, so dass ihr Energiebedarf durch über den magnetischen Flussleiter übertragene Leistung gedeckt wird. Eine derartige Auslegung der Vorrichtung ist vorteilhaft, da die Steuereinheit somit keiner zusätzlichen Energieversorgung bedarf.

Bei einem bevorzugten Ausführungsbeispiel ist die Vorrichtung ausgelegt, dass ein Anschluss und Entfernen von Energiespeicherbauteilen an dem ersten Energiespeicheranschluss, an dem zweiten Energiespeicheranschluss oder an einem weiteren Energiespeicheranschluss während des Betriebs möglich ist. Ein solches Ausführungsbeispiel ist begünstigt durch eine galvanische Trennung der Energiespeicherbauteile, d. h. beispielsweise dadurch, dass die Energiespeicherbauteile nicht elektrisch in Reihe geschaltet sind. Eine derartige Auslegung der Vorrichtung ist vorteilhaft, da das Anschließen oder Entfernen stattfinden kann, während weiterhin ein Energieaustausch zwischen einem oder mehreren Energiespeicherbauteilen und einem in dem magnetischen Flussleiter bestehenden magnetischen Wechselfeld stattfinden kann.
Bei einem bevorzugten Ausführungsbeispiel weist der erste oder der zweite Kopplungsmechanismus einen Sensor auf, der ausgelegt ist, um eine Spannung oder einen Strom eines Energiespeicherbauteils zu erfassen. Ein solcher Sensor kann beispielsweise vorteilhaft genutzt werden, um Spannungen oder Ströme, die auf das Energiespeicherbauteil wirken, zu erfassen.

Bei einem bevorzugten Ausführungsbeispiel ist die Vorrichtung ausgelegt, um durch den ersten Kopplungsmechanismus oder den zweiten Kopplungsmechanismus (beispielsweise durch Öffnen eines Halbleiterschalters zwischen dem Energiespeicheranschluss und einer auf dem magnetischen Flussleiter angeordneten Spule) eines der Energiespeicherbauteile während eines Betriebs, d. h. während weiterhin ein Energieaustausch durch ein oder mehrere andere Energiespeicherbauteile und dem magnetischen Wechselfeld besteht, vorübergehend abzukoppeln, wobei kein Energieaustausch zwischen dem abgekoppelten Energiespeicherbauteil und dem magnetischen Wechselfeld besteht. Des Weiteren ist die Vorrichtung ausgelegt, um beispielsweise während eines abgekoppelten Zustands des ersten Energiespeicherbauteils oder des zweiten Energiespeicherbauteils und während des Betriebs, d. h. während weiterhin ein Energieaustausch durch ein oder mehrere andere Energiespeicherbauteile und dem magnetischen Wechselfeld besteht, durch Messung beispielsweise der Leerlaufspannung oder des Innenwiderstands eines Energiespeicherbauteils einen Ladezustand oder einen Erhaltungszustand bzw. einen Alterungszustand des abgekoppelten Energiespeicherbauteils zu bestimmen, wobei das Energiespeicherbauteil beispielsweise nicht aus der Vorrichtung entfernt oder abgeklemmt werden muss.

Bei einem bevorzugten Ausführungsbeispiel ist die Vorrichtung ausgelegt ist, um durch den ersten Kopplungsmechanismus oder den zweiten Kopplungsmechanismus während eines Betriebs, während weiterhin ein Energieaustausch durch ein oder mehrere andere Energiespeicherbauteile und dem magnetischen Wechselfeld besteht, und während durch die Vorrichtung gemäß einem Lastprofil eine vorgegebene Leistung an eine Last abgegeben wird, einen Belastungszustand eines Energiespeicherbauteils zu verändern, um eine Charakterisierung des Energiespeicherbauteils vorzunehmen.

Für eine Innenwiderstandsbestimmung (des Energiespeicherbauteils) ist es eventuell (aber nicht zwingend). nötig, eine kurze definierte Belastung der Batterie (bzw. allgemein dem Energiespeicherbauteil) zuzuführen, ergänzend zu einer Messung der Leerlaufspannung (die beispielsweise bei abgekoppeltem Energiespeicherbauteil erfolgen kann).

Es wird beispielsweise gemäß einem Aspekt aus der Differenz der Ruhespannung und der Spannung im belasteten Zustand (bei definiertem Strom) eine Spannungsdifferenz (Überspannung) berechnet, die dann nach dem ohmschen Gesetz mit dem Strom einen Innenwiderstand ergibt.

Mit dem Aufbau gemäß der vorliegenden Erfindung (mit einzelnen Energiespeicherbauteilen, die galvanisch getrennt über jeweilige Kopplungsmechanismen mit einem gemeinsamen magnetischen Fluss bzw. einem gemeinsamen magnetischen Flussleiter gekoppelt sind) ist es möglich, für die einzelnen Bauteile (bzw. allgemein Energiespeicherbauteile) unterschiedliche Belastungen abzubilden (wie Diagnoseprofile/-messungen) und gleichzeitig ein übergeordnetes Lastprofil (zum Beispiel Antrieb Elektroauto) bereitzustellen.

Ein einfaches Abtrennen (eines Energiespeicherbauteils) (zum Beispiel während eines Betriebs) kann, wenn der Strom vor dem Abtrennen bekannt war, auch für eine Innenwiderstandsmessung verwendet werden. Damit hat man die Spannung und Strom bei Belastung und die Spannung in Ruhe (und kann diese Größen beispielsweise für weitere Berechnungen verwenden).

Allerdings ist die Strombelastung zuvor (beispielsweise vor dem Abtrennen) evtl. nicht definiert. Dementsprechend kann die Vorrichtung optional ergänzt werden, nämlich beispielsweise in der Art, dass mit dem Aufbau zum einen eine Abkopplung und/oder eine definierte Belastung (Strompuls), die unabhängig vom der restlichen Energiebereitstellung ist und eine Berechnung des Innenwiderstands zulässt, möglich ist. Neben dem Ladezustand kann mit dem Innenwiderstand so auch ein Rückschluss auf die Alterung und das Leistungsvermögen der Batterie getroffen werden.

Allgemein kann die hierin beschriebene Vorrichtung also (optional) so ausgelegt werden, dass die Möglichkeit einer definierten Belastung (z.B. Strompuls während des regulären Betriebs) zur Innenwiderstandsmessung bereitgestellt wird (was eine Charakterisierung des Energiespeicherbauteils ermöglicht).

Bei einem bevorzugten Ausführungsbeispiel weist die Vorrichtung eine Steuereinheit auf, die ausgelegt ist, um unabhängig von einer Polarität, mit der ein Energiespeicherbauteil mit einem Energiespeicheranschluss gekoppelt ist, ein Laden des Energiespeicherbauteils oder eine Kopplung von Energie von dem Energiespeicherbauteil zu einem magnetischen Feld durch den magnetischen Flussleiter zu ermöglichen. Eine Vorrichtung gemäß dem beschriebenen Ausführungsbeispiel ist vorteilhaft, um beispielsweise eine Gesundheitsgefährdung eines Nutzers durch das Anschließen von nicht ordnungsgemäß polarisierten Energiespeicherbauteilen zu verhindern.

Bei einem bevorzugten Ausführungsbeispiel ist die Vorrichtung ausgelegt, um einen Ladezustand des ersten Energiespeicherbauteils, das an dem ersten Energiespeicheranschluss angeschlossen ist, und einen Ladezustand des zweiten Energiespeicherbauteils, das an dem zweiten Energiespeicheranschluss angeschlossen ist, anzugleichen. Eine derart ausgelegtes Ausführungsbeispiel kann beispielsweise vorteilhaft genutzt werden, um Energiespeicherbauteile einzusetzen, die unterschiedliche Ladungsinhalte aufweisen.

Bei einem bevorzugten Ausführungsbeispiel ist die Vorrichtung ausgelegt, um durch selektives Laden oder Entladen eines an dem ersten Energiespeicheranschluss angeschlossenen Energiespeicherbauteils oder eines an dem zweiten Energiespeicheranschluss angeschlossenen Energiespeicherbauteils, deren Ladezustände anzugleichen. Ein selektives Laden oder Entladen kann vorteilhafterweise genutzt werden, um beispielsweise eine effiziente Ausnutzung der in den Energiespeicherbauteilen bereitgestellten Ladung zu ermöglichen.

Bei einem bevorzugten Ausführungsbeispiel ist die Vorrichtung ausgelegt, um durch verschieden schnelles Entladen von Energiespeicherbauteilen, die an verschiedenen Energiespeicheranschlüssen angeschlossen sind, Ladezustände der Energiespeicherbauteile anzugleichen. Die in dem Ausführungsbeispiel beschriebene Vorrichtung kann beispielsweise vorteilhaft genutzt werden, um Ladungsinhalte von Energiespeicherbauteilen effizient auszunutzen, da beispielsweise bei angeglichenem Ladungszustand eine effizientes Laden oder Entladen der Energiespeicherbauteil möglich ist.

Bei einem bevorzugten Ausführungsbeispiel ist die Vorrichtung ausgelegt, um nach Entladung eines Energiespeicherbauteils bis zu einer Entladeschlussgrenze, beispielsweise einer Grenze, bis zu der ein Energiespeicherbauteil entladen werden darf, mit einem oder mehreren anderen Energiespeicherbauteilen weiterhin ein Bereitstellen von Energie zu ermöglichen. Hierbei wird dem Energiespeicherbauteil, das die Entladeschlussgrenze erreicht hat, keine weitere Energie entzogen, da dies beispielsweise eine nachteilhafte Tiefenentladung erzeugen kann. In anderen Worten kann beispielsweise durch das Verhindern weiterer Entladung ein irreversibler Schaden an dem Energiespeicherbauteil verhindert werden. Hierbei ist vorteilhaft, dass durch Entnahme von Energie aus anderen Energiespeicherbauteilen ein fortlaufender Betrieb gewährleistet werden kann. Ein solcher Betrieb, beispielsweise Bereitstellen von Energie, kann mit weniger Gesamtleistung über einen Zeitraum geschehen, oder mit gleicher Gesamtleistung über einen kürzeren Zeitraum, verglichen mit einem Zustand in dem alle Energiespeicherbauteile zur Entladung zur Verfügung stehen.

Bei einem bevorzugten Ausführungsbeispiel weist der erste Kopplungsmechanismus und/oder der zweite Kopplungsmechanismus einen Temperatursensor auf, um die Temperaturen der angeschlossenen Energiespeicherbauteile zu erfassen. Eine solche Temperaturerfassung kann vorteilhaft genutzt werden, um ein Batteriemanagement zu realisieren.

Bei einem bevorzugten Ausführungsbeispiel ist die Vorrichtung ausgelegt, um anhand einer erfassten Temperatur eines Temperatursensors einen sicheren Betriebszustand der Energiespeicherbauteile zu gewährleisten. Beispielsweise kann eine so gewonnene Temperaturinformation vorteilhaft genutzt werden, um ein Energiespeicherbauteil vor Überhitzung zu schützen.

Bei einem bevorzugten Ausführungsbeispiel weist die Vorrichtung weitere induktive Kopplungsmechanismen auf, um weitere Quellen oder Verbraucher anzukoppeln. Eine derart ausgelegte Vorrichtung ist vorteilhaft, um beispielsweise eine Skalierbarkeit der Vorrichtung zu gewährleisten.

Ein bevorzugtes Ausführungsbeispiel beschreibt ein Energiespeichersystem. Das Energiespeichersystem umfasst eine Vorrichtung zum Zuführen von Energie zu einer Mehrzahl von Energiespeicherbauteilen und/oder zum Bereitstellen von in den Energiespeicherbauteilen gespeicherter Energie, wie in den oben aufgeführten Ausführungsbeispielen beschrieben. Weiterhin umfasst das Energiespeichersystem ein erstes Energiespeicherbauteil sowie ein zweites Energiespeicherbauteil, wobei die Energiespeicherbauteile durch wiederaufladbare Batterien realisiert sind. Ein derart ausgelegtes Ausführungsbeispiel ist beispielsweise vorteilhaft geeignet für eine kostengünstige Realisierung des Energiespeichersystems beispielsweise mittels handelsüblicher Batterien. Weiterhin können mit dem beschriebenen System insbesondere auf Seiten der Energiespeicherbauteile hohe Ströme und/oder Spannungen vermieden werden.

Bei einem bevorzugten Ausführungsbeispiel ist das Energiespeichersystem derart ausgelegt, dass ein erstes Energiespeicherbauteil, das an dem ersten Energiespeicheranschluss angeschlossen ist, sich von einem zweiten Energiespeicherbauteil, das an dem zweiten Energiespeicheranschluss angeschlossen ist, unterscheidet. Das erste und das zweite Energiespeicherbauteil können sich beispielsweise hinsichtlich ihrer Kapazität, Klemmenspannung, Anzahl der Zellen, Erhaltungszustand bzw. Alterungszustand oder Technologie der Batterie unterscheiden. Ein derart ausgelegtes System kann beispielsweise vorteilhaft sein, um Kosten zu sparen, beispielsweise durch Nutzung heterogener bereits vorhandener Energiespeicherbauteile, wodurch eine Neuanschaffung vermieden werden kann. Des Weiteren ist dieses System flexibel konfigurierbar hinsichtlich der eingesetzten Energiespeicherbauteile, beispielsweise kann eine gewünschte Zielspannung mit einer Unterschiedlichen Anzahl an Energiespeicherbauteilen unterschiedlicher Kapazität erzeugt werden. Bei herkömmlichen Systemen lässt sich die meist hohe Zielspannung (z.B. E-Auto 400Volt) durch Reihenschaltung der kleinen Zellspannungen (ca. 4 Volt) einstellen. Allerdings ist dadurch auch die Zahl der Zellen definiert und diese lässt sich dann nur noch durch Parallelschaltung vervielfachen, also mal 2, mal 3 usw. Gemäß dem beschriebenen Ausführungsbeispiel ist aber auch mal 2,5 möglich. Also beispielsweise statt 100 seriellen und 2 parallelen Zellen, werden 10 Energiespeicherbauteile mit jeweils 25 seriellen Zellen zusammengekoppelt. Es lässt sich also eine Spannung mit einer unterschiedlichen Anzahl von Zellen einstellen, diese können zusätzlich auch eine unterschiedliche Kapazität haben.

Bei einem bevorzugten Ausführungsbeispiel weist das Energiespeichersystem galvanisch getrennte Energiespeicherbauteile auf, die über den magnetischen Flussleiter magnetisch gekoppelt sind. Eine derart ausgelegtes System ist beispielsweise vorteilhaft, da somit das Entstehen von möglicherweise für einen Nutzer gefährlichen großen Gleichströmen oder Gleichspannungen vermieden werden kann.

Ein bevorzugtes Ausführungsbeispiel gemäß der Erfindung schafft ein Verfahren zum Zuführen von Energie zu einer Mehrzahl von Energiespeicherbauteilen und zum Bereitstellen von in den Energiespeicherbauteilen gespeicherter Energie. Hierbei ist ein erstes Energiespeicherbauteil und ein zweites Energiespeicherbauteil mit einem gemeinsamen magnetischen Flussleiter gekoppelt. Weiterhin umfasst das Verfahren eine zumindest zeitweise Verwendung von Energie des ersten Energiespeicherbauteils, um ein magnetisches Wechselfeld in dem gemeinsamen magnetischen Flussleiter zu erzeugen bzw. zu verstärken oder dazu beizutragen, und um einem mit dem magnetischen Flussleiter gekoppelten Verbraucher Energie bereitzustellen. Weiterhin umfasst das Verfahren ein zumindest zeitweises Zuführen von Energie, zu dem ersten Energiespeicherbauteil, basierend auf einem magnetischen Wechselfeld in dem magnetischen Flussleiter, das durch eine mit dem magnetischen Flussleiter gekoppelte Energiequelle erzeugt wird. Des Weiteren umfasst das Verfahren eine zumindest zeitweise Verwendung von Energie des zweiten Energiespeicherbauteils, um ein magnetisches Wechselfeld in dem gemeinsamen magnetischen Flussleiter zu erzeugen bzw. zu verstärken oder dazu beizutragen. Ferner umfasst das Verfahren eine zumindest zeitweise Zuführung von Energie basierend auf einem magnetischen Wechselfeld in dem magnetischen Flussleiter zu dem zweiten Energiespeicherbauteil. Das in dem Ausführungsbeispiel beschriebene Verfahren kann vorteilhaft genutzt werden, um flexibel Energiespeicherbauteile zu laden oder entladen. Das Verfahren kann um alle Merkmale und Funktionalitäten, die hierhin in Bezug auf die Erfindungsgemäßen Vorrichtungen beschrieben sind, erweitert werden.

Ein Ausführungsbeispiel der Erfindung schafft eine Vorrichtung zum Zuführen von Energie zu einer Mehrzahl von Energiespeicherbauteilen und/oder zum Bereitstellen von in den Energiespeicherbauteilen gespeicherter Energie. Die Vorrichtung umfasst einen ersten Energiespeicheranschluss zum Anschluss eines ersten Energiespeicherbauteils, einen zweiten Energiespeicheranschluss zum Anschluss eines zweiten Energiespeicherbauteils, einen weiteren Anschluss zum Zuführen oder Bereitstellen von Energie, einen gemeinsamen magnetischen Flussleiter, einen ersten Kopplungsmechanismus, der ausgelegt ist, um den ersten Energiespeicheranschluss und damit das erste Energiespeicherbauteil an den gemeinsamen magnetischen Flussleiter anzukoppeln, einen zweiten Kopplungsmechanismus, der ausgelegt ist, um den zweiten Energiespeicheranschluss und damit das zweite Energiespeicherbauteil an den gemeinsamen magnetischen Flussleiter anzukoppeln und einen weiteren Kopplungsmechanismus, der ausgelegt ist, um den weiteren Anschluss an den gemeinsamen magnetischen Flussleiter anzukoppeln. Weiterhin sind der erste Energiespeicheranschluss und der zweite Energiespeicheranschluss ausgelegt, um eine elektrische Reihenschaltung des ersten Energiespeicherbauteils und des zweiten Energiespeicherbauteils zu erreichen. Weiterhin ist die Vorrichtung ausgelegt, um durch selektives Laden oder Entladen eines an dem ersten Energiespeicheranschluss angeschlossenen Energiespeicherbauteils oder eines an dem zweiten Energiespeicheranschluss angeschlossenen Energiespeicherbauteils, deren Ladezustände anzugleichen. Eine solche Vorrichtung ist vorteilhaft, um den Energiespeicherbauteilen Ladung zuzuführen oder zu entziehen, wobei dies beispielweise vorteilhaft durch die elektrische Reihenschaltung geschehen kann oder durch die Kopplung über den gemeinsamen magnetischen Flussleiter. Beispielsweise kann die Reihenschaltung dazu dienen einen elektrischen Verbraucher mit Strom zu versorgen, während gleichzeitig über die magnetische Kopplung Energie den Energiespeicherbauteilen zugeführt wird. Allgemein gesprochen kann die Vorrichtung beispielsweise eine erste Funktionalität (zum Beispiel ein Laden der Energiespeicherbauteile oder eine Zuführung von Energie zu einem ersten Verbraucher) unter Verwendung der Serienschaltung erreichen. Eine zweite Funktionalität der Vorrichtung (beispielsweise ein Ladungsausgleich, ein Laden von einer anderen Energiequelle als bei der ersten Funktionalität oder ein Bereitstellen von Energie für einen anderen Verbraucher als bei der ersten Funktionalität) kann beispielsweise über die magnetische Kopplung erreicht werden. Die erste Funktionalität und die zweite Funktionalität können beispielsweise nacheinander oder auch gleichzeitig genutzt werden. Des Weiteren kann ein selektives Laden oder Entladen vorteilhafterweise genutzt werden, um beispielsweise eine effiziente Ausnutzung der in den Energiespeicherbauteilen bereitgestellten Ladung zu ermöglichen, wobei die gesteigerte Effizienz der Ausnutzung beispielsweise darauf basiert, dass beispielsweise kein Laden eines Energiespeicherbauteil notwendig ist um ein angleichen zu erzielen. Der für ein Laden notwendige Energiefluss könnte beispielsweise bei seinem Transport oder bei Entnahme oder Neueinlagerung zu zusätzlichen Verlusten führen. Da Laden von Energiespeicherbauteilen ein Altern beschleunigen kann ist es vorteilhaft Energiespeicherbauteile, die bereits schwach sind beziehungsweise einen fortgeschrittenen Alterungszustand aufweisen, nicht unnötig zu laden und einen Ladungsangleichung an andere Energiespeicherbauteile über selektives Entladen zu ermöglichen.

Bei einem bevorzugten Ausführungsbeispiel ist die Vorrichtung ausgelegt, um die elektrisch in Reihe geschalteten Energiespeicherbauteile unter Verwendung eines gemeinsamen Ladestroms gemeinsam zu laden, so dass der gemeinsame Ladestrom durch die Reihenschaltung fließt, und so dass die in Reihe geschalteten Energiespeicherbauteile z. B. aus Sicht einer Ladestromquelle effektiv als ein Energiespeicherbauteil wirken, dessen Klemmenspannung gleich einer Summe von Einzelklemmenspannungen der in Reihe geschalteten Energiespeicherbauteile ist. Eine solche Vorrichtung ist vorteilhaft, um beispielsweise eine Last über den gemeinsamen magnetischen Flussleiter mit Energie zu versorgen, wobei die Energiespeicherbauteile beispielsweise durch die elektrische Reihenschaltung mit Energie versorgt werden können.

Bei einem bevorzugten Ausführungsbeispiel ist die Vorrichtung ausgelegt, um eine gemeinsame Last über die in Reihe geschalteten Energiespeicherbauteile anzuschließen, so dass ein gemeinsamer Laststrom durch die Reihenschaltung fließt, und dass die in Reihe geschalteten Energiespeicherbauteile z. B. für die Last bzw. aus Sicht der Last effektiv als ein Energiespeicherbauteil wirken, dessen Klemmenspannung gleich einer Summe von Einzelklemmenspannungen der in Reihe geschalteten Energiespeicherbauteile ist. Eine derart ausgelegte Vorrichtung ist vorteilhaft, um ein Laden der Energiespeicherbauteile über den magnetischen Flussleiter durchzuführen, wobei beispielsweise gleichzeitig Energie aus den Energiespeicherbauteilen genutzt wird, um eine Last in der Serienschaltung zu versorgen.

Bei einem bevorzugten Ausführungsbeispiel ist die Vorrichtung ausgelegt, um ein individuelles Laden des ersten Energiespeicherbauteils, das an dem ersten Energiespeicheranschluss angeschlossen ist, und/oder ein individuelles Laden des zweiten Energiespeicherbauteils, das an dem zweiten Energiespeicheranschluss angeschlossen ist, durch individuelle Entnahme von Energie von dem magnetischen Wechselfeld des magnetischen Flussleiters über den ersten Kopplungsmechanismus und/oder den zweiten Kopplungsmechanismus zu ermöglichen. Eine derart ausgelegte Vorrichtung kann vorteilhaft sein, um beispielsweise unterschiedliche Ladezustände oder unterschiedliche Kapazitäten von Energiespeicherbauteilen zu berücksichtigen.

Ein bevorzugtes Ausführungsbeispiel der Erfindung beschreibt ein Energiespeichersystem. Das Energiespeichersystem umfasst eine Vorrichtung zum Zuführen von Energie zu einer Mehrzahl von Energiespeicherbauteilen und/oder zum Bereitstellen von in den Energiespeicherbauteilen gespeicherter Energie, wie sie oben beschrieben ist. Weiterhin umfasst das System ein erstes Energiespeicherbauteil und ein zweites Energiespeicherbauteil, wobei das erste Energiespeicherbauteil und das zweite Energiespeicherbauteil elektrisch in Reihe geschaltet sind. Ein derart ausgelegtes System kann beispielsweise vorteilhaft genutzt werden zum gleichzeitigen Bereitstellen von Energie und Zuführen von Energie aus oder in die Energiespeicherbauteile (beispielsweise Batterien) des Energiespeichersystems.

### Figurenkurzbeschreibung

Ausführungsbeispiele gemäß der vorliegenden Erfindung werden nachfolgend Bezug nehmend auf die beiliegenden Figuren näher erläutert. Es zeigen:
- Fig. 1 und 2: schematische Darstellungen von Vorrichtungen, gemäß einem Ausführungsbeispiel der vorliegenden Erfindung;
- Fig. 3: eine schematische Darstellung eines Energiespeichersystems, gemäß einem Ausführungsbeispiel der vorliegenden Erfindung;
- Fig. 4: eine schematische Darstellung einer Vorrichtung, gemäß einem Ausführungsbeispiel der Erfindung;
- Fig. 5 und 6a-c: schematische Darstellungen von Energiespeichersystemen, gemäß einem Ausführungsbeispiel der vorliegenden Erfindung
- Fig. 7: eine schematische Darstellung eines Verfahrens, gemäß einem Ausführungsbeispiel der Erfindung;
- Fig. 8: eine schematische Darstellung eines weiteren Ausführungsbeispiels der Erfindung; und
- Fig. 9: eine schematische Darstellung eines weiteren Ausführungsbeispiels der Erfindung; und

### Detaillierte Beschreibung der Ausführungbeispiele

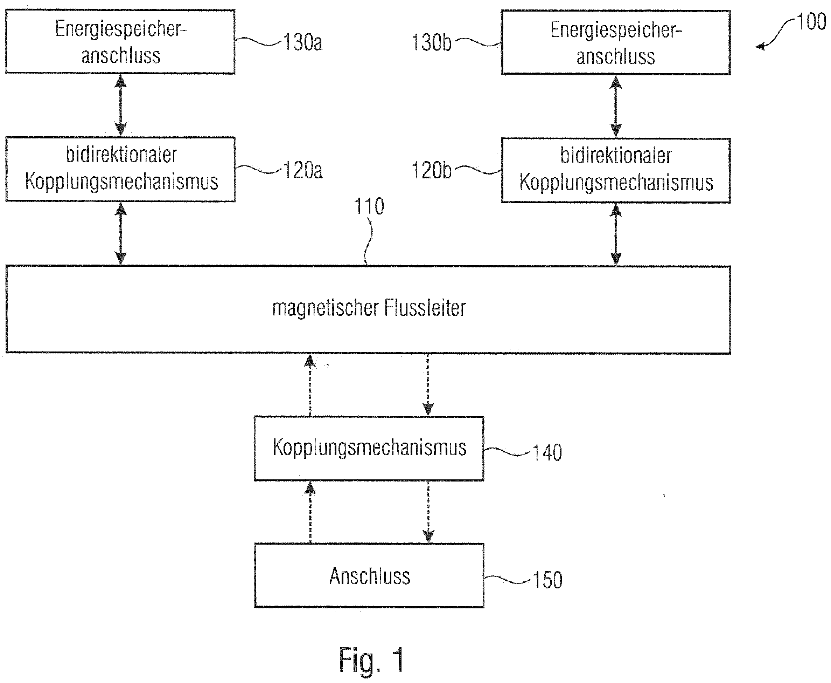

### 1. Ausführungsbeispiel gemäß Fig. 1

Fig. 1 zeigt eine schematische Darstellung einer Vorrichtung gemäß einem Ausführungsbeispiel der vorliegenden Erfindung.

Die Vorrichtung 100 umfasst einen magnetischen Flussleiter 110, einen ersten bidirektionalen Kopplungsmechanismus 120a sowie einen zweiten bidirektionalen Kopplungsmechanismus 120b, einen ersten Energiespeicheranschluss 130a sowie einen zweiten Energiespeicheranschluss 130b. Ferner umfasst die Vorrichtung 100 einen Kopplungsmechanismus 140 sowie einen weiteren Anschluss 150.

Die Energiespeicheranschlüsse 130a-b der Vorrichtung 100 sind ausgelegt, um das Anschließen von Energiespeicherbauteilen zu ermöglichen. Der erste bidirektionale Kopplungsmechanismus 120a und der zweite bidirektionale Kopplungsmechanismus 120b sind ausgelegt, um ein erstes Energiespeicherbauteil oder ein zweites Energiespeicherbauteil, welche jeweils an dem ersten Energiespeicheranschluss 130a oder dem zweiten Energiespeicheranschluss 130b angeschlossen sind, mit dem magnetischen Flussleiter 110 zu koppeln. Hierbei kann über den ersten bidirektionalen Kopplungsmechanismus 120a oder den zweiten bidirektionalen Kopplungsmechanismus 120b eine Energie in den magnetischen Flussleiter eingekoppelt werden oder aus dem magnetischen Flussleiter 110 ausgekoppelt werden. Die aus dem magnetischen Flussleiter 110 ausgekoppelte Energie kann beispielsweise über die Energiespeicheranschlüsse 130a-b einem ersten oder einem zweiten Energiespeicherbauteil zur Verfügung gestellt werden.

Im Übrigen kann beispielsweise die in den magnetischen Flussleiter 110 eingekoppelte Energie aus einem ersten Energiespeicherbauteil, das über den ersten Energiespeicheranschluss 130a und den ersten bidirektionalen Kopplungsmechanismus 120a der mit dem magnetischen Flussleiter 110 verknüpft ist, entnommen werden. Des Weiteren kann beispielsweise die in den magnetischen Flussleiter 110 eingekoppelte Energie aus einem zweiten Energiespeicherbauteil, das über den zweiten Energiespeicheranschluss 130b und den zweiten bidirektionalen Kopplungsmechanismus 120b der mit dem magnetischen Flussleiter 110 verknüpft ist, entnommen werden. Weiterhin kann die in den magnetischen Flussleiter 110 eingekoppelte Energie aus einer Mehrzahl von Energiespeicherbauteilen entnommen werden, die über Energiespeicheranschlüsse, beispielsweise die Energiespeicheranschlüsse 130a und 130b, und bidirektionale Kopplungsmechanismen, beispielsweise die Kopplungsmechanismen 120a und 120b, mit dem magnetischen Flussleiter 110 verknüpft sind.

Ferner kann ein weiterer Kopplungsmechanismus 140 beispielsweise dazu genutzt werden, um an dem Anschluss 150 Energie bereitzustellen. Des Weiteren kann der weitere Kopplungsmechanismus 140 beispielsweise dazu dienen, über den Anschluss 150 eine Quelle mit dem magnetischen Flussleiter zu verbinden, so dass Energie in den magnetischen Flussleiter eingekoppelt werden kann, wobei die Energie beispielsweise einem Energiespeicherbauteil, das mit einem der Energiespeicheranschlüsse 130a-b verbunden ist, bereitgestellt werden kann.

Zusammenfassend ist somit festzuhalten, dass durch Energietransfer über einen magnetischen Flussleiter 110, in dem ein magnetisches Wechselfeld ausgeprägt ist, ein Verbraucher am Anschluss 150 versorgt werden kann. Hierzu kann ein magnetische Wechselfeld mittels Energie, die aus Energiespeicherbauteilen entnommen wird, welche über die Energiespeicheranschlüsse 130a-b und den bidirektionalen Kopplungsmechanismen 120a-b mit dem magnetischen Flussleiter 110 verbunden sind, aufgebaut werden. Weiterhin kann einem ersten Energiespeicherbauteil oder einem zweiten Energiespeicherbauteil, das an dem ersten Energiespeicheranschluss 130a oder dem zweiten Energiespeicheranschluss 130b angeschlossen ist, Energie aus dem magnetischen Wechselfeld des magnetischen Flussleiters 110 zugeführt werden, wobei beispielsweise eine Quelle an dem weiteren Anschluss 150 das magnetische Wechselfeld in dem magnetischen Flussleiter 110 speist, d.h. zum Aufbau des magnetischen Wechselfelds beiträgt. Im Übrigen sind die Energiespeicheranschlüsse 130a und 130b ausgelegt, um Energiespeicherbauteile, die mit den Anschlüssen verbunden sind, galvanisch zu trennen.

Die Vorrichtung 100 kann optional um eine oder alle der im Folgenden noch beschriebenen strukturalen Merkmale bzw. Funktionalitäten erweitert werden.

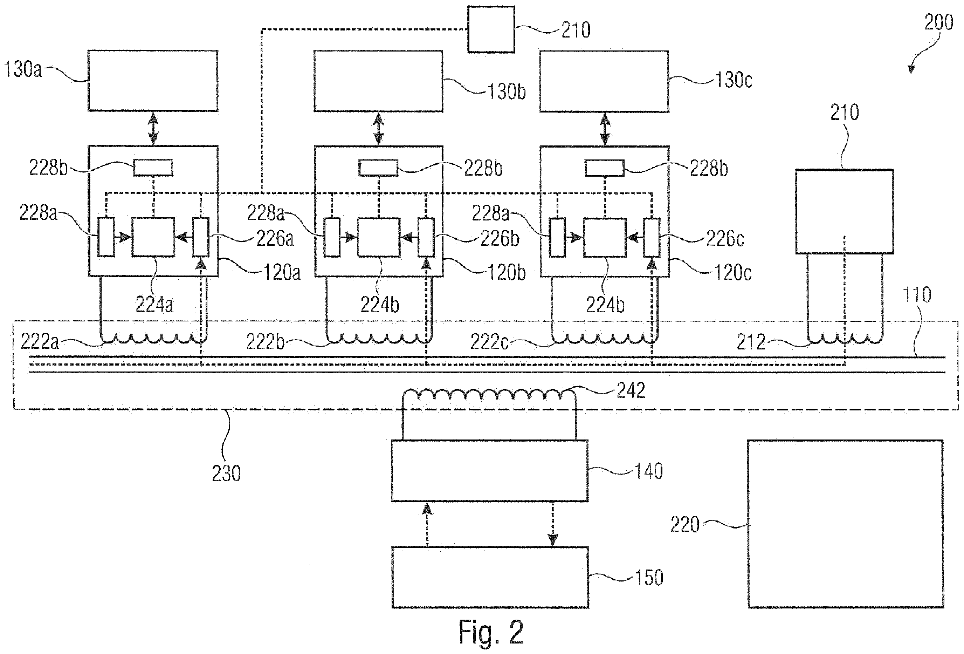

### 2. Ausführungsbeispiel gemäß Fig. 2

Fig. 2 zeigt eine schematische Darstellung einer Vorrichtung, gemäß einem Ausführungsbeispiel der vorliegenden Erfindung.

Die Vorrichtung 200 umfasst einen magnetischen Flussleiter 110, einen ersten bidirektionalen Kopplungsmechanismus 120a, einen zweiten bidirektionalen Kopplungsmechanismus 120b und einen weiteren bidirektionalen Kopplungsmechanismus 120c sowie einen ersten Energiespeicheranschluss 130a, einen zweiten Energiespeicheranschluss 130b und einen weiteren Energiespeicheranschluss 130c. Ferner umfasst die Vorrichtung 200 einen weiteren Kopplungsmechanismus 140 sowie einen weiteren Anschluss 150. Des Weiteren umfasst die Vorrichtung 200 eine zentrale Steuereinheit 210, die beispielsweise kabellos oder über den magnetischen Flussleiter induktiv mit den bidirektionalen Kopplungsmechanismen 120a-c gekoppelt ist. Ferner umfasst die Vorrichtung 200 einen weiteren optionalen induktiven Kopplungsmechanismus 220. Die bidirektionalen Kopplungsmechanismen 120a-c weisen jeweilige induktive Spulen 222a-c auf, womit eine Ankopplung des magnetischen Wechselfeldes in dem magnetischen Flussleiter 110 ermöglicht wird. Ferner weisen die bidirektionalen Kopplungsmechanismen 120a-c jeweilige Gleichspan-nungskreis-Wechselspannungskreis-Koppeleinrichtungen 224a-c auf, womit beispielsweise Gleichspannungsenergiespeicherbauteile an das magnetische Wechselfeld in dem magnetischen Flussleiter 110 angekoppelt werden können. Weiterhin können die bidirektionalen Kopplungsmechanismen 120 jeweils eine dezentrale Steuereinheit 226a-c, die jeweils in Verbindung mit der zentralen Steuereinheit 210 stehen, aufweisen. Des Weiteren können die bidirektionalen Kopplungsmechanismen 120a-c einen Temperatursensor 228a oder einen Spannungs- oder Stromsensor 228b aufweisen. Des Weiteren kann die zentrale Steuereinheit im Falle einer induktiven Ankopplung über den magnetischen Flussleiter 110 mit einer Spule 212 ausgestattet sein. Weiterhin weist der weitere Kopplungsmechanismus 140 eine Spule 242 auf, womit eine Ankopplung des weiteren Anschlusses 150 an den magnetischen Flussleiter 110 erfolgen kann. Weiterhin bildet die Anordnung der Spulen 222a-c, 212 und 242 auf dem magnetischen Flussleiter 110 einen Transformator 230.

Die bidirektionalen Kopplungsmechanismen 120a-c können beispielsweise mittels der Temperatursensoren 228a einen sicheren Betrieb der Energiespeicherbauteile, die an den Energiespeicheranschlüssen 130a-c angeschlossen sind, gewährleisten, um beispielsweise bei Überhitzung geeignete Gegenmaßnahmen, wie beispielsweise Abschaltung oder Kühlung der Energiespeicherbauteile einzuleiten. Weiterhin können die bidirektionalen Kopplungsmechanismen 120a-c mittels der Strom- oder Spannungssensoren 228b beispielsweise einen Ladezustand oder einen Erhaltungszustand eines jeweiligen Energiespeicherbauteils, welches an den Energiespeicheranschlüssen 130a-c angeschlossen ist, bestimmen, um beispielsweise gegebenenfalls geeignete Maßnahmen zum effizienten Betrieb der Energiespeicherbauteile zu ergreifen, wobei beispielsweise eine individuell einstellbare Energieentnahme oder Energiezufuhr aus oder in den jeweiligen Energiespeicherbauteil realisiert wird. Eine solche Spannungsbestimmung oder Strombestimmung kann beispielsweise durch vorübergehendes Abkoppeln des Energiespeicherbauteils, während beispielsweise weiterhin Energie am Anschluss 150 bereitgestellt oder zugeführt wird, durchgeführt werden, um einen Ladezustand oder einen Alterungszustand zu bestimmen.

Zusammenfassend kann somit festgehalten werden, dass durch die Vorrichtung 200 beispielsweise ein flexibles Laden und Entladen von Energiespeicherbauteilen, die an die Energiespeicheranschlüsse 130a-c angeschlossen werden können, ermöglicht wird. Entsprechend ihrem Ladezustand kann ihnen individuell Energie entnommen oder zugeführt werden. Diese individuelle Entnahme oder Zugabe von Energie wird insbesondere durch die bidirektionalen Kopplungsmechanismen 120a-c ermöglicht. Die Kopplungsmechanismen 120a-c können Energie aus dem magnetischen Wechselfeld des magnetischen Flussleiters 110 individuell einkoppeln oder auskoppeln. Beispielsweise durch Bereitstellung weiterer bidirektionaler Kopplungsmechanismen sowie Energiespeicheranschlüsse kann die Vorrichtung 200 individuell erweitert werden. Des Weiteren kann die Vorrichtung 200 beispielsweise mittels des weiteren Anschlusses 150 und des weiteren Kopplungsmechanismus 140 Energie dem magnetischen Wechselfeld des magnetischen Flussleiters 110 zuführen oder entnehmen. Beispielsweise kann eine Quelle an den weiteren Anschluss 150 angeschlossen werden, die über den weiteren Kopplungsmechanismus 140 Energie dem magnetischen Wechselfeld in dem magnetischen Flussleiter 110 zuführt. Ebenfalls kann beispielsweise eine Last an den weiteren Anschluss 150 angeschlossen werden, die durch Energie versorgt wird, die dem magnetischen Wechselfeld des magnetischen Flussleiters 110, über den weiteren Kopplungsmechanismus entnommen wird.

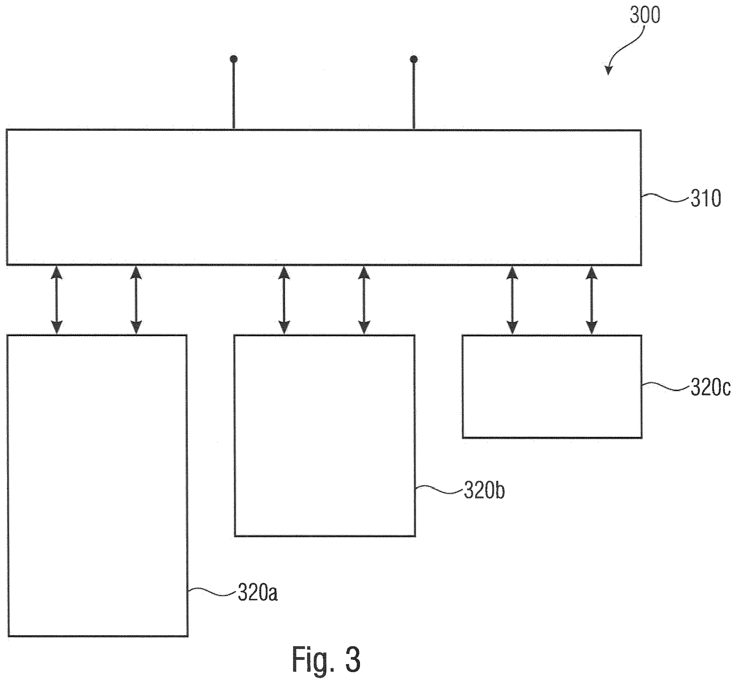

### 3. Energiespeichersystem gemäß Fig. 3

Fig. 3 zeigt eine schematische Darstellung eines Energiespeichersystems 300, gemäß einem Ausführungsbeispiel der Erfindung.

Das Energiespeichersystem 300 weist eine Vorrichtung 310 zum Zuführen von Energie zu einer Mehrzahl von Energiespeicherbauteilen und zum Bereitstellen von in den Energiespeicherbauteilen gespeicherter Energie, sowie ein erstes Energiespeicherbauteil 320a, ein zweites Energiespeicherbauteil 320b und ein weiteres Energiespeicherbauteil 320c auf. Die Energiespeicherbauteile 320a-c können elektrische Energiespeicher umfassen, beispielsweise wiederaufladbare Batterien oder Akkumulatoren. Des Weiteren können die Energiespeicherbauteile 320a-c individuell verschieden sein, beispielsweise kann ein erstes Energiespeicherbauteil 320a eine größere Anzahl von Einzelzellen oder Batterien umfassen als ein zweites Energiespeicherbauteil 320b. Weiterhin können die einzelnen Energiespeicherbauteile 320a-c beispielsweise aus jeweils einer Batterie bestehen, die individuell verschieden sind, beispielsweise bezüglich ihrer Kapazität, ihrem Erhaltungszustand, ihrem Alterungszustand oder der zugrundeliegenden Technologie. Weiterhin kann ein Energiespeicherbauteil 320a-c eine Mehrzahl von Batterien umfassen, beispielsweise in Form einer Reihen- oder Parallelschaltung von Einzelzellen oder Batterien.

Zusammenfassend ist somit festzuhalten, dass ein Energiespeichersystem 300 kostengünstig und flexibel bereits vorhandene Energiespeicherbauteile nutzen kann, so dass beispielsweise keine Neuanschaffung notwendig ist, da beispielsweise vorhandene Energiespeicher genutzt werden können.

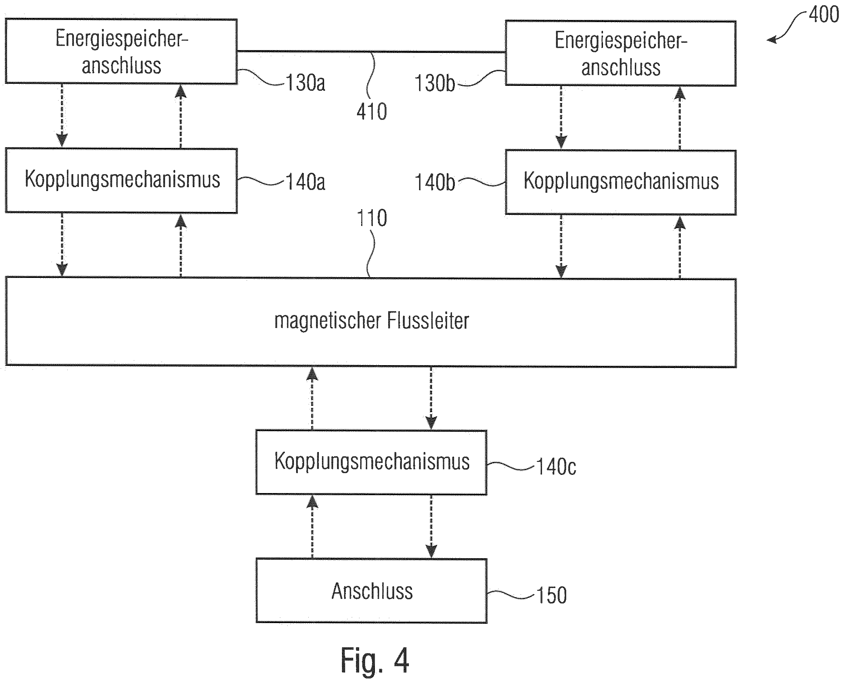

### 4. Ausführungbeispiele gemäß Fig. 4

Fig. 4 zeigt eine schematische Darstellung einer Vorrichtung 400, gemäß einem Ausführungsbeispiel der vorliegenden Erfindung.

Die Vorrichtung 400 umfasst einen magnetischen Flussleiter 110, einen ersten Kopplungsmechanismus 140a, einen zweiten Kopplungsmechanismus 140b, einen weiteren Kopplungsmechanismus 140c sowie einen ersten Energiespeicheranschluss 130a, einen zweiten Energiespeicheranschluss 130b und einen weiteren Anschluss 150. Weiterhin weist die Vorrichtung 400 eine serielle Verknüpfung 410 des ersten Energiespeicheranschlusses 130a und des zweiten Energiespeicheranschlusses 130b auf.

Der erste Kopplungsmechanismus 140a oder der zweite Kopplungsmechanismus 140b oder der weitere Kopplungsmechanismus 140c können ausgelegt sein, um Energie dem magnetischen Wechselfeld, das sich in dem magnetischen Flussleiter 110 ausbilden kann, zu entziehen oder zuzuführen. Somit kann ein flexibles Laden oder Entladen von an den Energiespeicheranschlüssen 130a und 130b angeschlossenen Energiespeicherbauteilen ermöglicht werden. Der weitere Anschluss 150 kann beispielsweise dazu dienen, eine Quelle anzuschließen, die genutzt werden kann, um Energie über den magnetischen Flussleiter 110 an den Energiespeicheranschlüssen 130a-b angeschlossenen Energiespeicherbauteilen zuzuführen. Weiterhin kann an dem weiteren Anschluss 150 auch beispielsweise eine Last angeschlossen werden, der Energie über den magnetischen Flussleiter 110 aus den an dem ersten Energiespeicheranschluss 130a oder den an dem zweiten Energiespeicheranschluss 130b angeschlossenen Energiespeicherbauteilen zugeführt werden kann. Durch die serielle Verknüpfung 410 können Energiespeicherbauteile, die an den Energiespeicheranschlüssen 130a und 130b angeschlossen sind, in Reihenschaltung verwendet werden. Beispielsweise kann ein gemeinsamer Ladestrom in die Energiespeicherbauteile, die an den Energiespeicheranschlüssen 130a und 130b angeschlossen sind, eingeprägt werden. Alternativ kann ein gemeinsamer Laststrom durch die Energiespeicherbauteile, die an den Energiespeicheranschlüssen 130a und 130b angeschlossen sind, fließen.

Zusammenfassend ist somit festzuhalten, dass die hier beschriebene Vorrichtung 400 geeignet ist, um beispielsweise Energiespeicherbauteile, die an dem ersten Energiespeicheranschluss 130a oder dem zweiten Energiespeicheranschluss 130b angeschlossen sind, individuell mit Energie zu versorgen, beispielsweise aus einer Quelle, die an dem weiteren Anschluss 150 angeschlossen ist. Weiterhin kann beispielsweise eine Last, die an dem weiteren Anschluss 150 angeschlossen ist, durch Energie aus Energiespeicherbauteilen, die an dem ersten Energiespeicheranschluss 130a oder dem zweiten Energiespeicheranschluss 130b entnommen wird, versorgt werden. Hierbei kann durch selektives Entladen von mit den Energiespeicheranschlüssen 130a und 130b verbundenen Energiespeicherbauteilen ein gegenseitiges Aufladen vermieden werden, um eine Angleichung oder Balancing der Energiespeicherbauteile zu ermöglichen. Hierdurch können beispielweise Verluste bei einem Umladen vermieden werden oder schwache Energiespeicherbauteile geschont werden, da ein Ladevorgang eine Alterung und damit Schwächung eines Energiespeicherbauteils hervorrufen kann.

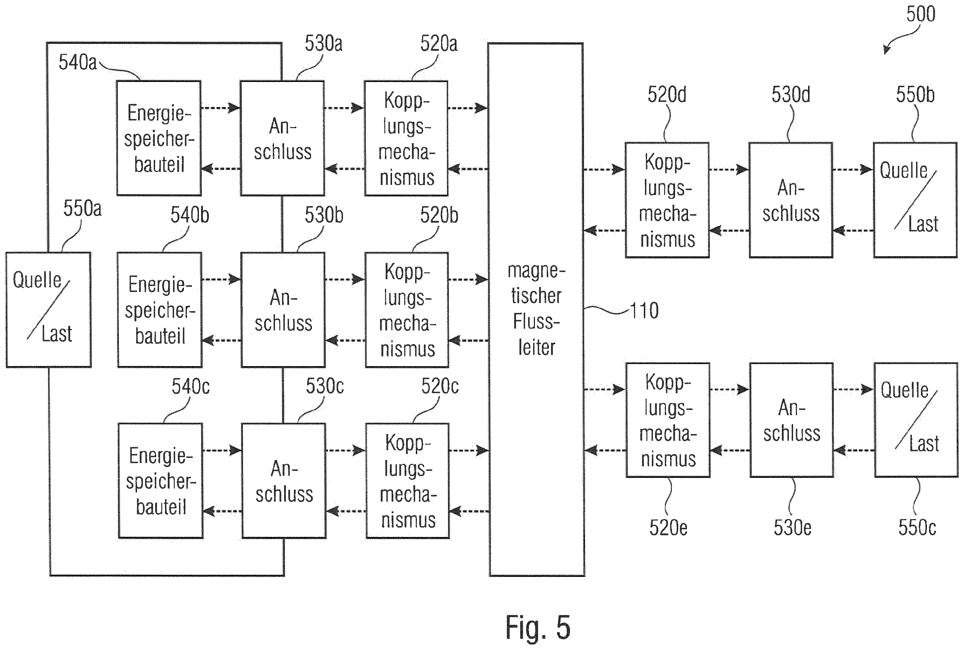

### 5. Ausführungbeispiele gemäß Fig. 5

Fig. 5 zeigt eine schematische Darstellung eines Energiespeichersystem 500, gemäß einem Ausführungsbeispiel der vorliegenden Erfindung.

Das Energiespeichersystem 500 umfasst einen magnetischen Flussleiter 110, mehrere Kopplungsmechanismen 520a-e, einen ersten Energiespeicheranschluss 530a, einen zweiten Energiespeicheranschluss 530b, einen weiteren Energiespeicheranschluss 530c sowie zwei weitere Anschlüsse 530d und 530e. Die Energiespeicheranschlüsse 530a-c sind derart ausgelegt, dass eine Reihenschaltung von Energiespeicherbauteilen, die an die Energiespeicheranschlüsse 530a-c angeschlossen sind, ermöglicht wird.

Die bisher beschriebenen Elemente des Energiespeichersystems 500 entsprechend weitestgehend den Elementen der Vorrichtung 400, wie sie in Fig. 4 beschrieben ist. Das Energiespeichersystem 500 umfasst weiterhin ein erstes Energiespeicherbauteil 540a, ein zweites Energiespeicherbauteil 540b sowie ein weiteres Energiespeicherbauteil 540c, welche an die Energiespeicheranschlüsse 530a-c angeschlossen und dadurch in Reihe geschaltet sind. Die Reihenschaltung kann beispielsweise die Nutzung, einer gemeinsamen Quelle 550a, die elektrisch in Reihe zu den Energiespeicherbauteilen geschaltet ist, zum Zuführen von Energie zu den Energiespeicherbauteilen ermöglichen. Im Übrigen kann die Reihenschaltung dazu dienen, um einen gemeinsame Last, die in Reihe zu den Energiespeicherbauteilen geschaltet ist, mit einem gemeinsamen Laststrom zu versorgen, wobei der Laststrom durch Energieentnahme aus den Energiespeicherbauteilen gespeist wird. Die Quelle oder Last 550a kann beispielsweise ein elektrischer Antrieb sein, der zeitweise die Charakteristik eines elektrischen Verbrauchers oder eines elektrischen Generators aufweist. Weiterhin können beispielsweise weitere Quellen oder Lasten 550b und 550c über den gemeinsamen magnetischen Flussleiter 110 verknüpft werden. Hierbei können weitere Quellen, beispielsweise 550b und 550c, zum Zuführen von Energie zu den Energiespeicherbauteilen dienen. Weiterhin können weitere Lasten, beispielsweise 550b und 550c, durch Energie, die aus den Energiespeicherbauteilen entnommen wird, versorgt werden.

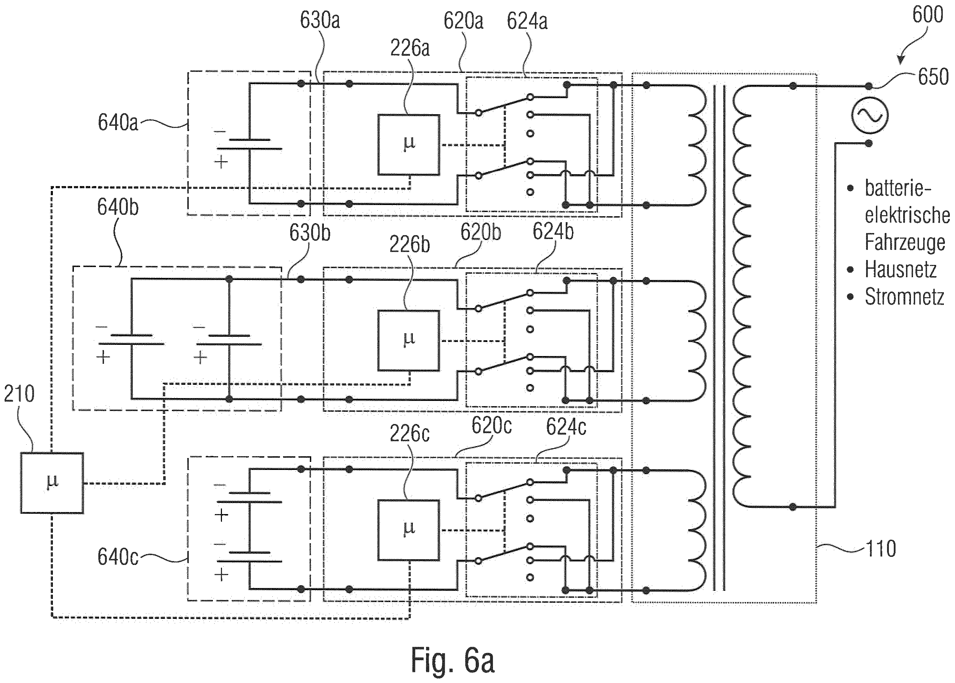

### 6. Ausführungsbeispiele gemäß Fig. 6a-c

Fig. 6a-c zeigen schematische Darstellungen einer Vorrichtung gemäß einem Ausführungsbeispiel der vorliegenden Erfindung.

Die Vorrichtung 600 weist drei Energiespeicherbauteile 640a-c auf, wobei das Energiespeicherbauteil 640a eine einzelne Batteriezelle umfasst, das Energiespeicherbauteil 640b zwei Batteriezellen in Parallelschaltung umfasst und das Energiespeicherbauteil 640c zwei Batteriezellen in Reihenschaltung umfasst. Die Energiespeicherbauteile 640a-c sind über Energiespeicheranschlüsse 630a-c an jeweilige bidirektionale Kopplungsmechanismen 620a-c angeschlossen. Die bidirektionalen Kopplungsmechanismen 620a-c verknüpfen die Energiespeicherbauteile 640a-c über einen gemeinsamen magnetischen Flussleiter 110 mittels Spulen miteinander sowie mit einem weiteren Anschluss 650, der zum Anschließen einer Quelle oder einer Last geeignet ist. Die bidirektionalen Kopplungsmechanismen 620a-c weisen jeweils eine Gleichspannungskreis-Wechselspannungskreis-Koppeleinrichtung 624a-c auf. Weiterhin weisen die bidirektionalen Kopplungsmechanismen 620a-c jeweils eine dezentrale Steuereinheit 226a-c auf. Des Weiteren weist die Vorrichtung 600 eine zentrale Steuereinheit 210 auf. In Fig. 6a wird ein Ausführungsbeispiel der Vorrichtung 600 beschrieben, in dem die zentrale Steuereinheit 210 mit den dezentralen Steuereinheiten 226a-c beispielsweise über eine kabelgebunden Verbindung kommunizieren.

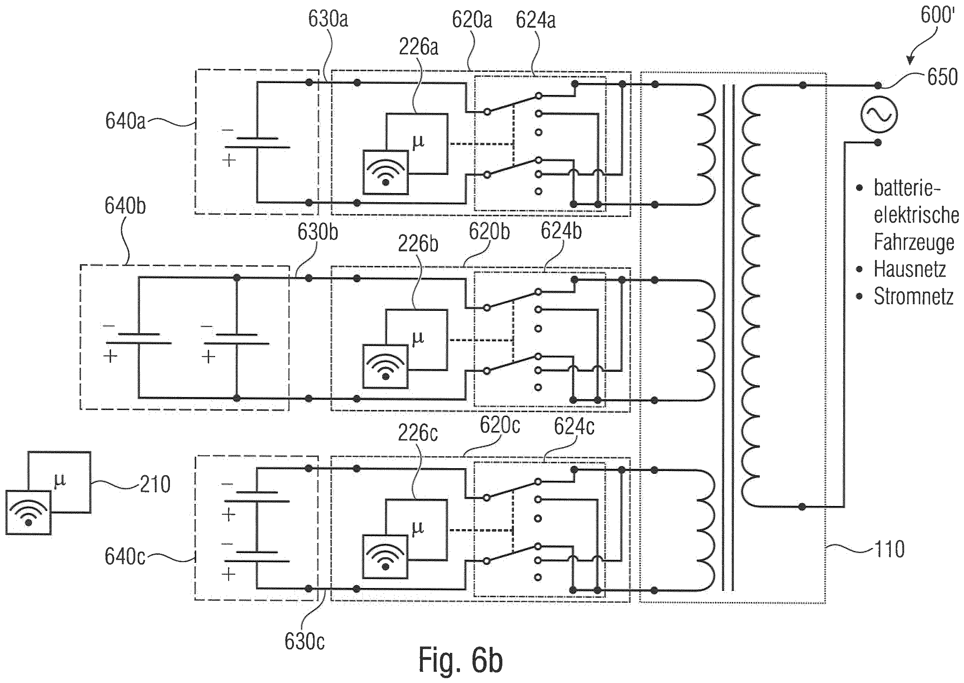

In Fig. 6b wird hingegen ein Ausführungsbeispiel der Vorrichtung 600' beschrieben, die der Vorrichtung 600 sehr ähnlich ist, und bei der die Kommunikation zwischen zentraler Steuereinheit 210 und dezentralen Steuereinheiten beispielsweise über eine Funkverbindung realisiert ist. Korrespondierende Merkmale bei den Vorrichtungen 600 und 600' sind mit gleichen Bezugszeichen bezeichnet und werden hier nicht noch einmal erläutert. Viel mehr wird auf die Ausführung bei der Vorrichtung 600 verwiesen.

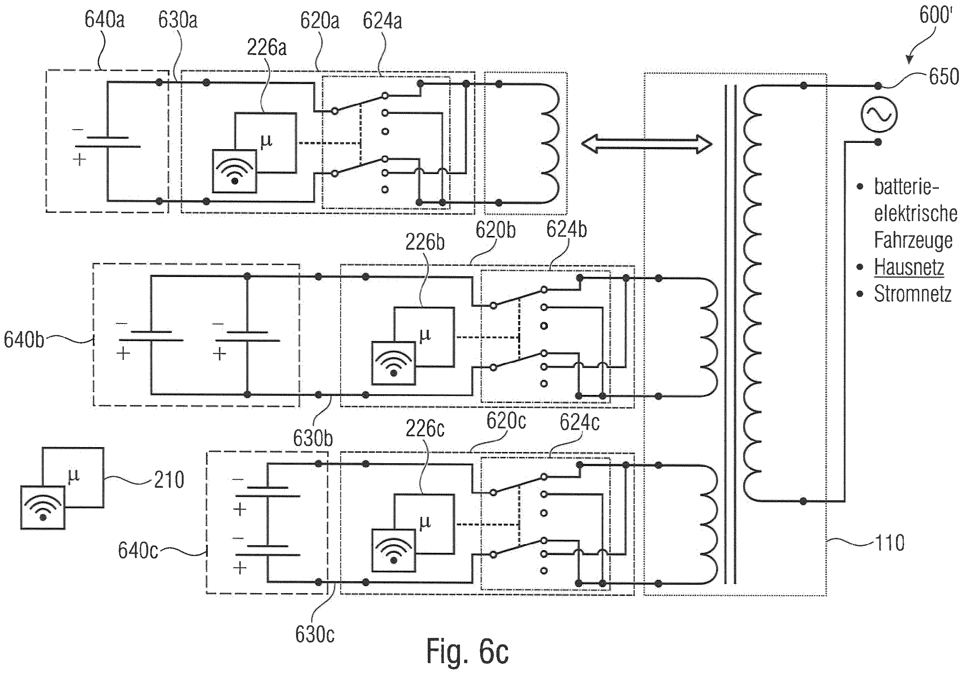

Die Fig. 6c illustriert, dass bei Vorrichtung 600' gemäß einem Ausführungsbeispiel der Erfindung das Hinzufügen oder Entfernen eines Energiespeicherbauteils 640a sowie des zugehörigen Energiespeicheranschlusses 630a und dem korrespondierenden Kopplungsmechanismus 620, möglich ist. Dies wird durch die in Fig. 6b beschriebene kabellose Verbindung der zentralen Steuereinheit 210 mit den dezentralen Steuereinheiten 226a-c ermöglicht beziehungsweise erleichtert. Die hier beschriebenen Vorrichtungen 600 und 600' sind daher besonders vorteilhaft, um ein skalierbares Energiespeichersystem zu realisieren.

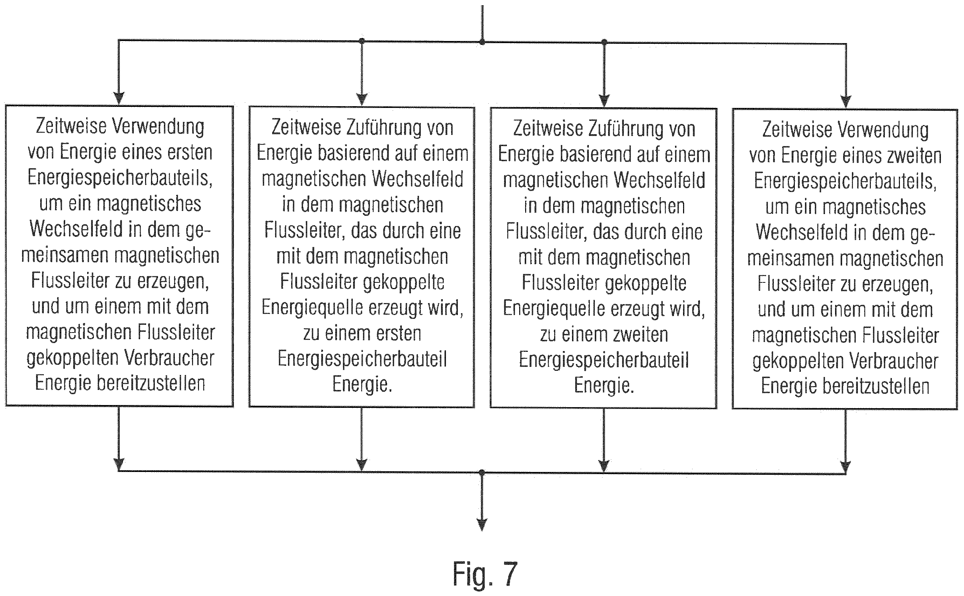

### 7. Ausführungsbeispiel gemäß Fig. 7

Fig. 7 illustriert ein Ausführungsbeispiel eines Verfahrens gemäß der Erfindung. In dem in Fig. 7 illustrierten Verfahren ist ein möglicher zeitlicher Verlauf von Zuführung und Verwendung von Energie dargestellt. Hierbei kann gleichzeitig oder sequentielle einem ersten Energiespeicherbauteil und einem zweiten Energiespeicherbauteil Energie entnommen werden, um ein magnetisches Wechselfeld in dem gemeinsamen Flussleiter zu erzeugen. Weiterhin kann gleichzeitig oder sequentiell dem ersten Energiespeicherbauteil oder dem zweiten Energiespeicherbauteil Energie, basierend auf dem magnetischen Wechselfeld in dem magnetischen Flussleiter, zugeführt werden. Die Reihenfolge der beschriebenen Schritte ist für das hier beschriebene Verfahren unerheblich, wodurch das Verfahren eine besonders hohe Flexibilität bezüglich der Zufuhr oder Entnahme von Energie aus Energiespeicherbauteilen bietet.

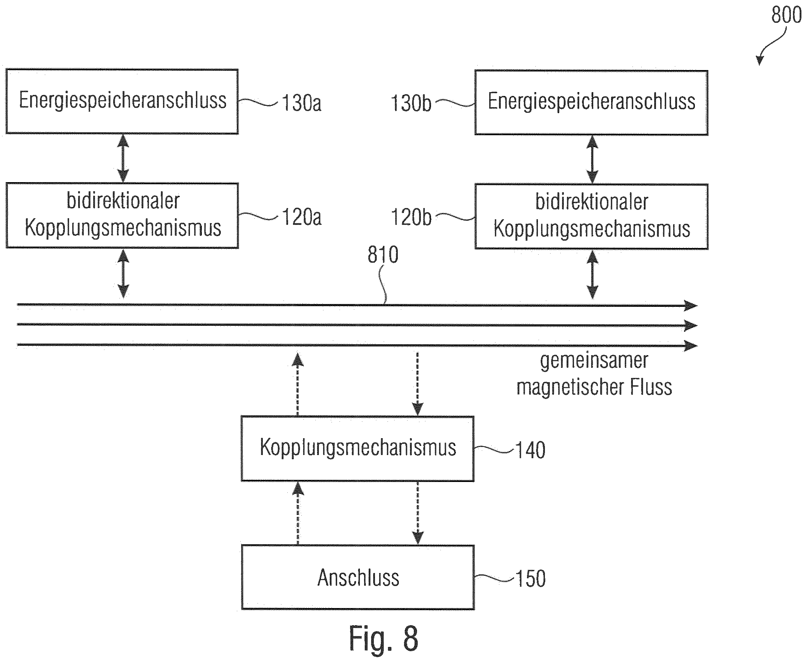

### 8. Ausführungsbeispiel gemäß Fig. 8

Fig. 8 zeigt eine schematische Darstellung eines weiteren Ausführungsbeispiels der vorliegenden Erfindung.

Die Vorrichtung 800 gemäß der Fig. 8 unterscheidet sich nur geringfügig von der Vorrichtung 100 gemäß Fig. 1. Daher sind gleiche Merkmale hier mit gleichen Bezugszeichen bezeichnet.

Ein wesentlicher Unterschied zur Vorrichtung 100 gemäß der Fig. 1 besteht darin, dass bei der Vorrichtung 800 gemäß Fig. 8 nicht notwendigerweise ein gemeinsamer magnetischer Flussleiter existiert. Vielmehr ist es ganz allgemein ausreichend, dass die Energiespeicheranschlüsse 130a,130b und der weitere Anschluss 150 durch entsprechende Kopplungsmechanismen an einen gemeinsamen magnetischen Fluss 810 angekoppelt sind. Ein gemeinsamer magnetsicher Flussleiter ist hierzu nicht zwingend erforderlich. Vielmehr können beispielsweise entsprechende Koppelspulen, die Teil der Kopplungsmechanismen sein können, über das Freifeld mit einem gemeinsamen magnetischen Fluss gekoppelt sein.

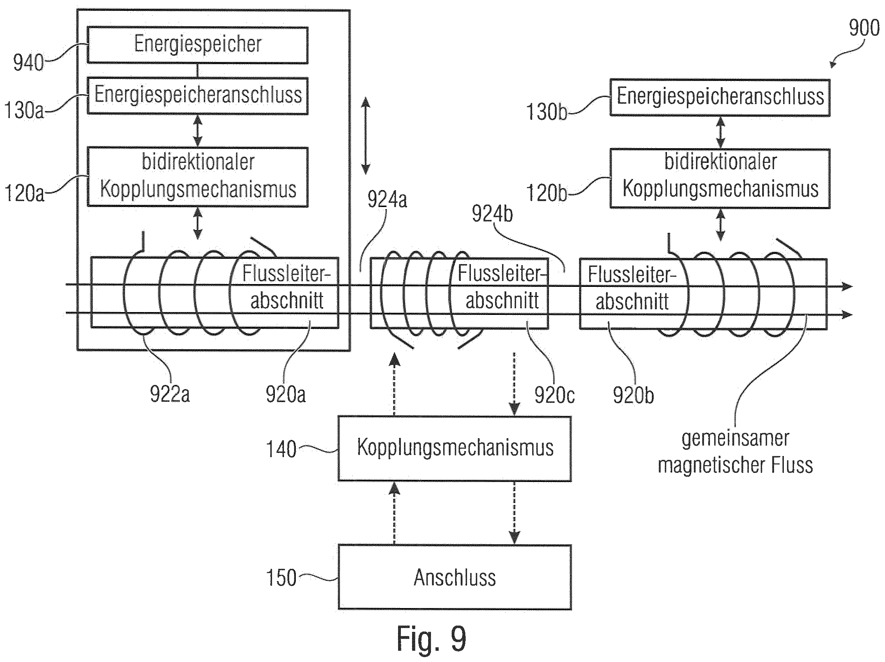

Alternativ dazu können beispielsweise die verschiedenen Energiespeicheranschlüsse über jeweilige Kopplungsmechanismen mit jeweiligen Flussleiterabschnitten gekoppelt sein. Details dazu werden anhand der Fig. 9 näher erläutert.

### 9. Ausführungsbeispiel gemäß Fig. 9

Fig. 9 zeigt eine schematische Darstellung eines weiteren Ausführungsbeispiels der vorliegenden Erfindung.

Die Vorrichtung 900 gemäß der Fig. 9 unterscheidet sich nur geringfügig von der Vorrichtung 100 gemäß Fig. 1. Daher sind gleiche Merkmale hier mit gleichen Bezugszeichen bezeichnet.

Bei der Vorrichtung 900 gemäß Fig. 9 sind ist der erste Energiespeicheranschluss 130a über einen ersten bidirektionalen Kopplungsmechanismus 120a mit einem ersten Flussleiterabschnitt 920a (beziehungsweise einer auf den ersten Flussleiterabschnitt aufgewickelten ersten Koppelinduktivität) gekoppelt. Der zweite Energiespeicheranschluss 130b ist über den zweiten bidirektionalen Kopplungsmechanismus 120b mit dem zweiten Flussleiterabschnitt 920b (beziehungsweise einer auf den zweiten Flussleiterabschnitt aufgewickelten zweiten Koppelinduktivität) gekoppelt. Der weitere Anschluss 150 ist über den weiteren Kopplungsmechanismus 140 mit einem dritten Flussleiterabschnitt 920c (beziehungsweise einer auf den dritten Flussleiterabschnitt aufgewickelten dritten Koppelinduktivität) gekoppelt.

Die Flussleiterabschnitte 920a, 920b, 920c können in einem Betriebszustand einen gemeinsamen magnetischen Flussleiter bilden, wobei allerdings beispielsweise Spalte 924a, 924b zwischen den Flussleiterabschnitten bestehen können. Der "gemeinsame" magnetische Flussleiter ist allerdings hier nicht einstückig, sondern aus mehreren trennbaren Abschnitten zusammengesetzt.

Beispielsweise ist es möglich, den ersten Flussleiterabschnitt 920a zusammen mit dem zugehörigen ersten bidirektionalen Kopplungsmechanismus 120a und dem zugehörigen ersten Energiespeicheranschluss 130, und bevorzugt auch zusammen mit einem an den ersten Energiespeicheranschluss angeschlossenen Energiespeicher im Betrieb der Vorrichtung 900 (also während der gemeinsame magnetische Fluss besteht) zu entfernen. Dabei ist es beispielsweise nicht erforderlich, Kabelverbindunggen zu lösen, da beispielsweise der gesamte Block umfassend den ersten Flussleiterabschnitt 920a, den ersten bidirektionalen Kopplungsmechanismus 120am den ersten Energiespeicheranschluss 130a und den nicht gezeichneten ersten Energiespeicher, lediglich über den gemeinsamen magnetischen Fluss mit den anderen Einheiten der Vorrichtung 900 gekoppelt ist. Die Vorrichtung 900 kann zu diesem Zwecke auch mechanisch so ausgelegt sein, dass der genannte Block ohne Entfernung sicherheitsrelevanter Abdeckungen während des Betriebs entnehmbar bzw. austauschbar ist. Somit ist es möglich, einen Energiespeicher samt des dazugehörigen Kopplungsmechanismus und des dazugehörigen Flussleiterabschnitts zu tauschen.

Ein Ausführungsbeispiel umfasst damit ein Vorrichtung 900 zum Zuführen von Energie zu einer Mehrzahl von Energiespeicherbauteilen und zum Bereitstellen von in den Energiespeicherbauteilen gespeicherter Energie, mit einem ersten Energiespeicheranschluss zum Anschluss eines ersten Energiespeicherbauteils, einem zweiten Energiespeicheranschluss zum Anschluss eines zweiten Energiespeicherbauteils und einem weiteren Anschluss 150 zum Zuführen und/oder Bereitstellen von Energie. Die Vorrichtung umfasst auch einem ersten Kopplungsmechanismus 120a , der ausgelegt ist, um den ersten Energiespeicheranschluss an einen gemeinsamen magnetischen Fluss bidirektional anzukoppeln, einen zweiten Kopplungsmechanismus 120b, der ausgelegt ist, um den zweiten Energiespeicheranschluss an den gemeinsamen magnetischen Fluss bidirektional anzukoppeln, und einen weiteren Kopplungsmechanismus 140, der ausgelegt ist, um den weiteren Anschluss an den gemeinsamen magnetischen Fluss anzukoppeln. Die Vorrichtung weist eine galvanische Trennung des ersten Energiespeicheranschlusses und des zweiten Energiespeicheranschlusses sowie des weiteren Anschlusses auf. Die Vorrichtung ist derart ausgelegt ist, dass ein Ankoppeln und Entfernen von Energiespeicherbauteilen zusammen mit einem zugehörigen Kopplungsmechanismus an den gemeinsamen magnetischen Fluss während des Betriebs möglich ist. Die Vorrichtung ist so ausgelegt, dass ein Ankoppeln oder Entfernen erfolgen kann, während weiterhin ein Energieaustausch zwischen einem oder mehreren Energiespeicherbauteilen über den gemeinsamen magnetischen Fluss stattfindet. Das Ankoppeln kann beispielsweise erreicht werden, indem ein entsprechender Abschnitt des magnetischen Flussleiters (beispielsweise mechanisch zusammen mit dem jeweiligen Kopplungsmechanismus und dem jeweiligen Energiespeicherbauteil) zu dem Bereich hingeführt wird, in dem der gemeinsame magnetische Fluss besteht. Das Entfernen kann beispielsweise erfolgen, indem ein entsprechender Abschnitt des magnetischen Flussleiters (beispielsweise mechanisch zusammen mit dem jeweiligen Kopplungsmechanismus und dem jeweiligen Energiespeicherbauteil) von dem Bereich wegbewegt wird, in dem der gemeinsame magnetische Fluss besteht.

Somit ist es mit dem Aufbau (optional) möglich, einen Speicherbaustein (Energiespeicherbauteil) ohne die Trennung irgendeines elektrischen Kontakts zu entfernen. Hierzu sitzt die Spule nicht auf einem gemeinsamen Kern, ist allerdings im Magnetfeld (induktive Kopplung) des restlichen Aufbaus (beispielsweise in dem gemeinsamen magnetischen Fluss). So kann sie jederzeit vom System entfernt werden, da nie eine mechanische Verbindung (Kabel oder Ähnliches.) bestand.

An die Stelle des oben beschriebenen gemeinsamen magnetischen Flussleiter kann somit ganz allgemein, auch bei den anderen hierin beschriebenen Ausführungsbeispielen, ein gemeinsamer magnetischer Fluss treten. So ist es ausreichend, wenn das Magnetfeld, mit dem die Kopplungsmechanismen gekoppelt sind, gemeinsam ist. Der Eisenkern der Spule(n) könnte jedoch separat gestaltet sein.

Bei den hierin beschrieben Ausführungsbeispielen können also auch getrennten Magnetkerne verwendet werden, anstelle des oben beschriebenen gemeinsamen magnetischen Flussleiters. Somit kann (optional) nicht nur die Spule elektrisch abgetrennt werden, sondern es kann auch die Spule mit dem Baustein (zum Beispiel mit dem Kopplungsmechanismus und gegebenenfalls einem Abschnitt eines magnetischen Flussleiters) entfernt werden (ohne also einen elektrischen Kontakt zu unterbrechen).

Das ist beispielsweise in Fig. 9 ersichtlich, wo die Spule 922a mit restlichem Aufbau 920a, 120a, 130a,940 entfernt/hinzugefügt wird.

### 10. Weitere Aspekte und chlussfolgerung

Im Folgenden werden einige Überlegungen und Erkenntnisse dargestellt, die bei der Entwicklung des Erfindungskonzepts berücksichtigt wurden.

Zur Speicherung elektrischer Energie kann eine galvanische Zelle (Batteriezelle) verwendet werden. Diese hat üblicherweise aber eine geringe Spannung und teilweise auch geringen Strom. Dies bedeutet, dass mehrere Zellen zu einer Batterie zusammengefasst werden können um eine höhere Spannung oder einen höheren Strom zu erzeugen.

Für die Verbindungen der einzelnen Batteriezellen finden verschiedene Methoden Anwendung. Viele sind allerdings nur mit hohem Aufwand wieder zu lösen. Zudem funktioniert das Speichersystem nicht mehr, wenn nur ein serielles Element ausfällt, im Gegensatz zu einigen Ausführungsbeispielen gemäß der Erfindung.

Hohe Ströme können nicht mehr mit einfachen Schaltelementen (z.B. MOSFETs (Metaloxide-Semiconductor Field Effect Transistor = Metall-Oxid-Halbleiter Feldeffekttransistoren)) geschalten werden und bei hohen Spannungen muss eine ausreichende Isolation sichergestellt werden. Diese beiden Punkte können die Kosten für elektrische Bauelemente in die Höhe treiben.

Hohe Gleichströme bzw. Gleichspannungen können als sicherheitskritisch angesehen werden. Zum einen besteht die Problematik, dass Lichtbögen bei Gleichstrom weniger gut abreißen. Zum anderen müssen ab gewissen Grenzwerten spezifische Normen und Regularien berücksichtigt werden.

Der Ladezustand einer Batterie kann durch den Betrag der Ruhespannung ermittelt werden. Ist die Batterie im Betrieb, fließt also Strom, ändert sich dieser Spannungswert. Dies hat zur Folge, dass aufwendige Batteriezellenmodelle erarbeitet werden müssen, um eine Aussage über den Ladezustand zu haben.

Der Zellstrang ist durch die serielle, elektrische Verbindung auf die Kapazität der schlechtesten Zelle beschränkt. Das bedeutet, dass sobald die schlechteste Zelle keine Ladung mehr bereitstellen kann, kann auch das Gesamtsystem keine Leistung mehr abgeben, im Gegensatz zu einigen Ausführungsbeispielen gemäß der Erfindung.

Im Folgenden werden einige Vergleichsbeispiele beschrieben.

Die Verbindung von kleinen galvanischen Zellen zu einem leistungsstarken Batteriesystem erfolgt bei einigen Vergleichsbeispielen durch eine serielle evtl. auch parallele elektrische Verschaltung mittels elektrischer Leiter (Kupferkabel).

Um eine gute Verbindung zu erzielen, werden die Batteriezellen in manchen Fällen verschweißt oder verlötet. Dementsprechend ist ein Austausch mit hohem Aufwand verbunden. Wird eine Batteriezelle oder ein Batteriesegment entfernt, ist die Batterie bei einigen Vergleichsbeispielen nicht mehr oder nur sehr eingeschränkt einsatzbereit.

Für die Verschaltung werden manchmal bei einigen Vergleichsbeispielen spezielle Bauelemente verwendet und auf eine hohe Isolation geachtet. Sicherheitsauflagen aus Normen können angewandt werden. Der Ladezustand wird durch ein komplexes Batteriemodell ermittelt, das zusätzlich mit einem Stromsensor in der Lage ist den Ladezustand zu erfassen.

Durch sogenanntes aktives Balancing kann die Leistung bzw. Kapazität der schlechtesten Zelle vom restlichen Batteriesystem kompensiert werden. Diese Variante des Balancing ist allerdings bei herkömmlichen Batteriesystemen verglichen mit der Alternative, dem passiven Balancing, deutlich teurer und aufwändiger, weshalb sie kaum Einsatz findet. In der Regel wird durch ein passives Balancing verhindert, das sich Ungleichheiten im Betrieb akkumulieren. Die Leistung des Batteriesystems bleibt aber auf die der schlechtesten Zelle beschränkt.

Im Folgenden werden weitere Ausführungsbeispiele beziehungsweise Merkmale oder Aspekte, die zu den hierhin beschriebenen Ausführungsbeispielen einzeln oder in Kombination hinzugefügt werden können, beschrieben.

Ausführungsbeispiele gemäß der Erfindung schaffen eine Zusammenführung einer Leistung (zum Beispiel von mehreren Energiespeicherbauteilen) durch magnetische Kopplung auf einem Eisenkern (oder allgemein einem magnetischen Flussleiter) mittels mehrerer Spulen. Weiterhin schaffen manche Ausführungsbeispiele gemäß der Erfindung eine Unterteilung der Batteriespannungsebenen mittels eigenem Anschluss auf einem Transformator. Des Weiteren beschränken sich Ausführungsbeispiele gemäß der Erfindung nicht auf eine Bordversorgung in automobilen Anwendungen. Ferner umfassen Ausführungsbeispiele gemäß der Erfindung Systeme mit einem gemeinsamen Transformator.

Manche Ausführungsbeispiele gemäß der Erfindung ermöglichen, dass viele Einzelzellen einer Batterie über eine magnetische Kopplung zusammenfasst werden, womit ein aktives oder passives Balancing in manchen Fällen überflüssig wird und hohe Gleichströme oder Gleichspannungen vermieden werden können.

Des Weiteren dienen manche Ausführungsbeispiele gemäß der Erfindungen gemäß der Erfindung sowohl dem Laden als auch dem Entladen einer Batterie, womit ein bidirektionales System geschaffen wird, wodurch sich ein Balancing in manchen Fällen erübrigt. Weiterhin beschreiben manche Ausführungsbeispiele gemäß der Erfindung Systeme, in denen Zellen nicht seriell elektrisch gekoppelt sind. Ferner beschreiben Ausführungsbeispiele gemäß der Erfindung eine vorteilhafte Unterteilung einer Batterie. Weiterhin beschreiben Ausführungsbeispiele gemäß der Erfindung Systeme, die viele Zellen einer Batterie über eine magnetische Kopplung zusammenfassen, womit ein aktives oder passives Balancing in manchen Fällen überflüssig wird und hohe Gleichströme oder hohe Gleichspannungen vermieden werden können. Des Weiteren umfassen Ausführungsbeispiele gemäß der Erfindung Systeme, die einen Speicher vorsehen.

Ausführungsbeispiele gemäß der Erfindung beschreiben einen Batteriespeicher, der zumindest einige der oben genannten Probleme umgeht, indem die Zellen oder Zellverbünde nicht elektrisch sondern magnetisch mittels Transformator verbunden sind. Da eine magnetische Koppelung der Energien der einzelnen Batterien bevorzugt mit wechselndem Strom möglich ist kann beispielsweise eine Steuereinheit zwischengeschaltet werden (zum Beispiel zwischen die Energiespeicheranschlüsse und den magnetischen Flussleiter). Dies erweckt den Eindruck, aufwendiger zu sein, birgt aber viele Vorteile, die deutlich überwiegen können.

Diese Vorteile, die bei einigen Ausführungsbeispielen einzeln oder in Kombination verwirklicht werden können, sind:
- Einzelne Batteriezellen bzw. Zellverbünde können, sogar während des Betriebs, entfernt oder ausgetauscht werden.
- Es können verschiedene Batterien eingesetzt werden (Hersteller, Kapazität, Spannung, Grad der Alterung usw.)
- Die Leistung jedes Zellsegments wird komplett ausgenutzt.
- Durch eine kurzes Pausieren eines Segments kann dessen Leerlaufspannung und so dessen Ladegrad bestimmt werden.
- Nirgendwo im System treten hohe Gleichströme bzw. Gleichspannungen auf.
- Findet die Kommunikation (diese kann sehr einfach gehalten werden: bspw. kann nur eine Solleistung an die Steuereinheiten gesendet werden) der Steuereinheiten mit dem Energiemanagement über Funk statt, ist ein Batteriesegment komplett kabellos über das Magnetfeld (beispielsweise des magnetischen Flussleiters) bzw. die Funkverbindung an das (restliche) Batteriesystem angekoppelt. Es kann also so konstruiert werden, dass für eine Abtrennung keine elektrische Verbindung gekappt werden muss.
- Die Steuereinheit kann an beiden Anschlüssen (Batterie und Induktionsspule) einen Spannungssensor aufweisen. Zudem kann sie die Verbindung der jeweiligen Pole invertieren bzw. komplett trennen. Damit kann die Steuereinheit bzw. das Batteriesystem so gestaltet werden, dass beim Anschluss der Batterie die Polarität erkannt und die Steuerung dementsprechend angepasst wird. Damit ist eine Verwechslung der Pole und damit ein falsches Anschließen der Batterie unproblematisch. Somit ist ein hohes Sicherheitsrisiko bei der Montage oder dem Tausch von Batterien ausgeschlossen.
- Der Ladungsgrad der Batteriesegmente (oder im allgemeinen eines Energiespeicherbauteils) kann durch die Steuereinheit aktiv an die der anderen Segmente (beispielsweise über andere Koppeleinrichtungen mit dem magnetischen Flussleiter gekoppelte Energiespeicherbauteile) angepasst werden. Neben einer besseren Ausnutzung der Kapazität bringt dies einen weiteren Effizienzvorteil, da auf einen passiven Ladungsausgleich über Entladewiderstände beim Ladevorgang verzichtet werden kann. Somit wird also keine Energie durch Entladewiderstände verschwendet und keine zusätzliche, ungewollte Wärme ins Batteriesystem gebracht.
- Über weitere Spulen auf dem Magnetkern oder Magnetfelder in unmittelbarer Nähe kann das System leicht ergänzt werden (Induktives Laden eines Fahrzeugs, Einbindung anderer Verbraucher (Bordnetz, DC-Hausnetz etc.) oder Energiequellen (z.B. Photovoltaikanlage) ist möglich).

Eine Frequenz (beispielsweise eine Frequenz des magnetischen Wechselfelds in dem magnetischen Flussleiter) kann variabel sein, kann aber auch auf einen Zielwert eingestellt werden. Dieser kann der Netzfrequenz (50Hz) entsprechen oder höher sein und mit einer zwischengeschalteten Regelung/Verschaltung auf die Netzfrequenz reduziert werden.

Bei einem Transformator kann es sich um einen Einphasentransformator oder um einen Dreiphasentransformator handeln, wobei bei dem Dreiphasentransformator die einzelnen Batterieinduktionsspulen an mehreren Stellen integriert sein können.

Neben der Spannung der angeschlossenen Batterie und die der Induktion (beispielsweise der in der Spule induzierten Spannung), kann gemäß einem Ausführungsbeispiels der Erfindung die Steuereinheit beispielsweise auch über einen oder mehrere Sensoren die Temperatur der Batteriezelle bzw. Batteriezellen überwachen und durch eine Leistungsbegrenzung bzw. eine Abschaltung des Segments auf die Temperatur reagieren.

Die Steuereinheit (beispielsweise eine dezentrale Steuereinheit) der Batterieinduktionsspulen kann, gemäß einem Ausführungsbeispiel der Erfindung, gleichzeitig Batteriemanagementaufgaben übernehmen. Es kann aber auch eine separate, lokale oder zentrale Batteriemanagementeinheit (Steuereinheit) eingesetzt werden.

Gemäß einem Ausführungsbeispiel der Erfindung, können die Steuerungseinheiten so konzipiert werden, dass deren Energiebedarf durch die induzierte Leistung und / oder durch die Batterie gedeckt wird.

Gemäß einem Ausführungsbeispiel der Erfindung ist ein Stromsensor nicht zwingend notwendig, kann aber die Steuerungseinheit ergänzen.

Ein System, gemäß einem Ausführungsbeispiel der Erfindung, kann mittels eines Kondensators parallel zur Batterieanordnung bzw. durch die Verwendung von hohen Frequenzen optimiert werden.

Gemäß einem Ausführungsbeispiel der Erfindung, können durch die Messung der Induktionsspannung die Steuereinheiten den Phasengang erfassen und so ihr Schaltverhalten anpassen. Alternativ werden die Signale für die Schalter vom Energiemanagement kommuniziert, das ebenfalls über Sensoren zur Spannungsmessung bzw. zur Messung der Phasen verfügen kann.

Gemäß einem Ausführungsbeispiel der Erfindung, kann neben einem einphasigen Transformator das hier präsentierte Batteriesystem auch einen mehrphasigen Transformator aufweisen, an den mehrere Induktionskreise mit Batteriezellen angeschlossen sind.

Ein Ausführungsbeispiel gemäß der Erfindung schafft, dass das Batteriemanagementsystem und die Steuerungseinheit (Wechselrichter) zusammengelegt werden können.

Bei Ausführungsbeispielen gemäß der Erfindung, kann die Kommunikation mittels Kabelverbindung, beispielsweise SPI (Serial-Peripheral Interface = Serielle Peripherie Schnittstelle), CAN (Controller Area Network = Serielles Bussystem, beispielsweise eingesetzt im Automobilbereich) etc. oder kabellos mittels WLAN (Wireless Local Area Netwok = Kabelloses lokales Netzwerk), Bluetooth, NFC (Near-Field Communication=Nahfeldkommunikation) oder ähnlichem stattfinden. Zudem kann die Kommunikation über die induzierte Spannung selbst stattfinden. Hierzu kann das zentrale Energiemanagementsystem auch mit einer eigenen Spule an den Magnetkern angebunden sein.

Bei Ausführungsbeispielen gemäß der Erfindung, können neben Lithium-Ionen-Batterien auch andere Speichersysteme (Blei-Säure, NiMH (Nickel-Metallhydrid), Kondensatoren etc.) eingebunden werden.

Speichersysteme gemäß der Erfindung können so konzipiert werden, dass einzelne Spulen (auch im Betrieb) entfernt oder hinzugefügt werden können.

Ausführungsbeispiele gemäß der Erfindung weisen als technisches Merkmal eine magnetische Verbindung und damit eine galvanische Trennung der einzelnen Segmente eines Batteriespeichersystems auf. Im Besonderen können beispielsweise die Batteriezellen über eine Schalt- bzw. Steuereinrichtung mittels einer Spule auf einem Magnetkern untereinander und mit der Stromquelle/Stromsenke über ein magnetisches Wechselfeld verbunden werden. Damit können beispielsweise günstigere, sicherere, austauschbarere und aktiv gebalancede (ausgeglichene) Batteriespeichersysteme realisiert werden.

Ausführungsbeispiele gemäß der Erfindung ermöglichen ein selektives Laden oder Entladen von Energiespeicherbauteilen, womit Ladezustände von angeschlossenen Energiespeicherbauteilen angeglichen werden können. Hierbei ist besonders vorteilhaft, dass beispielsweise keine Energie von einem Energiespeicherbauteil zu einem anderen zugeführt werden muss, um einen Angleichung zu erzielen. Insbesondere kann hierdurch ein konventionelles aktives Balancing (Energieübertrag von Zellen mit hohem Ladezustand auf Zellen mit geringerem Ladezustand) überflüssig werden. Mit dem beschriebenen System findet durch das selektive Laden wie im Absatz zuvor betont ein aktives Balancing statt. Allerdings mit dem Vorteil, dass die gespeicherte Energie nicht umverteilt werden muss um das System zu homogenisieren.

Gemäß einem weiteren Ausführungsbeispiel der Erfindung ermöglicht die Vorrichtung eine Berücksichtigung eines Alterungszustands eines Energiespeicherbauteil bei der Entnahme von Energie aus dem Energiespeicherbauteil, so dass ein an den Alterungszustand angepasster Entladestrom aus dem Energiespeicherbauteil entzogen wird. Beispielsweise kann einem Energiespeicherbauteil mit starken Alterungserscheinungen ein geringerer Entladestrom entnommen werden. Des Weiteren ermöglicht die Vorrichtung ein an den Alterungszustand angepasstes Laden eines Energiespeicherbauteils, beispielsweise kann einem Energiespeicherbauteil, das bereits starke Alterungserscheinungen aufweist, ein geringerer Ladestrom zugeführt werden.

## Patentansprüche

1. Vorrichtung (100; 200; 310; 400; 500; 600; 600') zum Zuführen von Energie zu einer Mehrzahl von Energiespeicherbauteilen und zum Bereitstellen von in den Energiespeicherbauteilen gespeicherter Energie,
mit folgenden Merkmalen:
einem ersten Energiespeicheranschluss (130a; 530a; 630a) zum Anschluss eines ersten Energiespeicherbauteils;
einem zweiten Energiespeicheranschluss (130b; 530b; 630b) zum Anschluss eines zweiten Energiespeicherbauteils;
einem weiteren Anschluss (150; 530d-e; 650) zum Zuführen und/oder Bereitstellen von Energie;
einem ersten Kopplungsmechanismus (120a), der ausgelegt ist, um den ersten Energiespeicheranschluss an einen gemeinsamen magnetischen Fluss bidirektional anzukoppeln;
einem zweiten Kopplungsmechanismus (120b), der ausgelegt ist, um den zweiten Energiespeicheranschluss an den gemeinsamen magnetischen Fluss bidirektional anzukoppeln;
einem weiteren Kopplungsmechanismus (140; 520d-e), der ausgelegt ist, um den weiteren Anschluss an den gemeinsamen magnetischen Fluss anzukoppeln;
wobei die Vorrichtung eine galvanische Trennung des ersten Energiespeicheranschlusses und des zweiten Energiespeicheranschlusses sowie des weiteren Anschlusses aufweist;
wobei die Vorrichtung derart ausgelegt ist, dass ein Ankoppeln und Entfernen von Energiespeicherbauteilen zusammen mit einem zugehörigen Kopplungsmechanismus an den gemeinsamen magnetischen Fluss während des Betriebs möglich ist,
**dadurch gekennzeichnet dass** bei dem Ankoppeln eine koppelinduktivität (922a), die mit dem ersten Kopplungsmechanismus gekoppelt ist, mechanisch zusammen mit dem ersten Kopplungsmechanismus (120a) und dem an dem ersten Energiespeicheranschluss (130a) angeschlossenen ersten Energiespeicher (940) zu dem Bereich hingeführt wird, in dem der gemeinsame magnetische Fluss besteht, und
und dass bei dem Entfernen die Koppelinduktivität (922a), die mit dem ersten Kopplungsmechanismus gekoppelt ist, mechanisch zusammen mit dem ersten Kopplungsmechanismus (120a) und dem an dem ersten Energiespeicheranschluss (130a) angeschlossenen ersten Energiespeicher (940) von dem Bereich wegbewegt wird, in dem der gemeinsame magnetische Fluss besteht;
und dass die Vorrichtung so ausgelegt ist, dass ein Ankoppeln oder Entfernen erfolgen kann, während weiterhin ein Energieaustausch zwischen einem oder mehreren Energiespeicherbauteilen über den gemeinsamen magnetischen Fluss stattfindet.

2. Vorrichtung gemäß Anspruch 1, wobei die Vorrichtung so ausgelegt ist, dass es möglich ist, einen ersten Flussleiterabschnitt zusammen mit dem ersten Kopplungsmechanismus (120a) und dem ersten Energiespeicheranschluss (130a) und dem an dem ersten Energiespeicheranschluss angeschlossenen ersten Energiespeicherbauteil zu entfernen, während der gemeinsame magnetische Fluss besteht,
wobei der erste Flussleiterabschnitt in einem Betrieb Teil eines mehrere trennbare Abschnitte umfassenden gemeinsamen magnetischen Flussleiters ist.

3. Vorrichtung gemäß einem der Ansprüche 1 bis 2,
wobei bei dem Ankoppeln eine Spule (922a), die mit dem ersten Kopplungsmechanismus gekoppelt ist, mechanisch zusammen mit einem Abschnitt eines magnetischen Flussleiters, dem ersten Kopplungsmechanismus (120a) und dem an dem ersten Energiespeicheranschluss (130a) angeschlossenen ersten Energiespeicher (940) zu dem Bereich hingeführt wird, in dem der gemeinsame magnetische Fluss besteht, und
wobei bei dem Entfernen eine Spule (922a), die mit dem ersten Kopplungsmechanismus gekoppelt ist, mechanisch zusammen mit dem ersten Kopplungsmechanismus (120a) und dem an dem ersten Energiespeicheranschluss (130a) angeschlossenen ersten Energiespeicher (940) von dem Bereich wegbewegt wird, in dem der gemeinsame magnetische Fluss besteht;

## Claims

1. Device (100; 200; 310; 400; 500; 600; 600') for supplying energy to a plurality of energy storage components and for providing energy stored within the energy storage components,
comprising:
a first energy storage terminal (130a; 530a; 630a) for connecting a first energy storage component;
a second energy storage terminal (130b; 530b; 630b) for connecting a second energy storage component;
a further terminal (150; 530d-e; 650) for supplying and/or providing energy;
a first coupling mechanism (120a) configured to bidirectionally couple the first energy storage terminal to the shared magnetic flux;
a second coupling mechanism (120b) configured to bidirectionally couple the second energy storage terminal to the shared magnetic flux;
a further coupling mechanism (140; 520d-e) configured to couple the further terminal to the shared magnetic flux;
the device comprising galvanic separation of the first energy storage terminal and of the second energy storage terminal as well as of the further terminal;
the device being configured such that coupling and removal of energy storage components to the shared magnetic flux together with an associated coupling mechanism is possible during operation,
**characterized in that**
said coupling involves mechanically guiding a coupling inductance (922a), which is coupled to the first coupling mechanism, to that area wherein there is the shared magnetic flux, together with the first coupling mechanism (120a) and the first energy store (940) connected to the first energy storage terminal (130a), and
**in that** said removal involves mechanically guiding the coupling inductance (922a), which is coupled to the first coupling mechanism, away from that area wherein there is the shared magnetic flux, together with the first coupling mechanism (120a) and the first energy store (940) connected to the first energy storage terminal (130a);
and **in that** the device is configured such that coupling or removal may be performed while an exchange of energy continues to take place between one or more energy storage components via the shared magnetic flux.

2. Device as claimed in claim 1, the device being configured to enable removing of a first flux guide portion together with the first coupling mechanism (120a) and the first energy storage terminal (130a) and the first energy storage component connected to the first energy storage terminal while there is the shared magnetic flux,
the first flux guide portion being part, during operation, of a shared magnetic flux guide including several separable portions.

3. Device as claimed in any of claims 1 to 2,
wherein said coupling involves mechanically guiding a coil (922a), which is coupled to the first coupling mechanism, to that area wherein there is the shared magnetic flux, together with a portion of a magnetic flux guide, the first coupling mechanism (120a) and the first energy store (940) connected to the first energy storage terminal (130a), and
wherein said removal involves mechanically guiding a coil (922a), which is coupled to the first coupling mechanism, away from that area wherein there is the shared magnetic flux, together with the first coupling mechanism (120a) and the first energy store (940) connected to the first energy storage terminal (130a).

## Revendications

1. Dispositif (100; 200; 310; 400; 500; 600; 600') pour alimenter de l'énergie vers une pluralité de composants d'accumulation d'énergie et pour fournir de l'énergie accumulée dans les composants d'accumulation d'énergie,
aux caractéristiques suivantes:
une première borne d'accumulation d'énergie (130a; 530a; 630a) destinée au raccordement d'un premier composant d'accumulation d'énergie;
une deuxième borne d'accumulation d'énergie (130b; 530b; 630b) destinée au raccordement d'un deuxième composant d'accumulation d'énergie;
une autre borne (150; 530d à e; 650) destinée à alimenter et/ou à mettre à disposition de l'énergie;
un premier mécanisme de couplage (120a) qui est conçu pour coupler de manière bidirectionnelle la première borne d'accumulation d'énergie à un flux magnétique commun;
un deuxième mécanisme de couplage (120b) qui est conçu pour coupler de manière bidirectionnelle la deuxième borne d'accumulation d'énergie au flux magnétique commun;
un autre mécanisme de couplage (140; 520d à e) qui est conçu pour coupler l'autre borne au flux magnétique commun;
le dispositif présentant une isolation galvanique de la première borne d'accumulation d'énergie et de la deuxième borne d'accumulation d'énergie ainsi que de l'autre borne;
le dispositif étant conçu de sorte que soit possible un couplage et un découplage des composants d'accumulation d'énergie ensemble avec un mécanisme de couplage associé au flux magnétique commun pendant le fonctionnement,
**caractérisé par le fait que**, lors du couplage, une inductance de couplage (922a) qui est couplée au premier mécanisme de couplage soit amenée mécaniquement, ensemble avec le premier mécanisme de couplage (120a) et le premier accumulateur d'énergie (940) raccordé à la première borne d'accumulation d'énergie (130a), vers la zone dans laquelle existe le flux magnétique commun, et
et que, lors du découplage, l'inductance de couplage (922a) qui est couplée au premier mécanisme de couplage soit éloignée mécaniquement, ensemble avec le premier mécanisme de couplage (120a) et le premier accumulateur d'énergie (940) raccordé à la première borne d'accumulation d'énergie (130a), de la zone dans laquelle existe le flux magnétique commun;
et que le dispositif est conçu de sorte qu'un couplage ou un découplage puisse avoir lieu tandis qu'a lieu par ailleurs un échange d'énergie entre un ou plusieurs composants d'accumulation d'énergie par l'intermédiaire du flux magnétique commun.

2. Dispositif selon la revendication 1, dans lequel le dispositif est conçu de sorte qu'il soit possible de découpler un premier segment de conducteur de flux ensemble avec le premier mécanisme de couplage (120a) et la première borne d'accumulation d'énergie (130a) et le premier composant d'accumulation d'énergie raccordé à la première borne d'accumulation d'énergie tandis que le flux magnétique commun existe,
dans lequel le premier segment de conducteur de flux fait partie, lors d'un fonctionnement, d'un conducteur de flux magnétique commun comportant plusieurs segments séparables.

3. Dispositif selon l'une des revendications 1 à 2,
dans lequel, lors du couplage, une bobine (922a) qui est couplée par le premier mécanisme de couplage est amenée mécaniquement ensemble avec un segment d'un conducteur de flux magnétique, le premier mécanisme de couplage (120a) et le premier accumulateur d'énergie (940) raccordé à la première borne d'accumulation d'énergie (130a), vers la zone dans laquelle existe le flux magnétique commun, et
dans lequel, lors du découplage, une bobine (922a) qui est couplée par le premier mécanisme de couplage, est découplée mécaniquement ensemble avec le premier mécanisme de couplage (120a) et le premier accumulateur d'énergie (940) raccordé à la première borne d'accumulation d'énergie (130a) de la zone dans laquelle existe le flux magnétique commun.
